# FASCICULE DE BREVET EUROPEEN

(11) **EP 3 154 663 B1**
(45) Date de publication et mention de la délivrance du brevet: **14.08.2019**
(21) Numéro de dépôt: 15726213.0
(22) Date de dépôt: 09.06.2015
(51) Int. Cl.: B01D 53/64, B01J 20/02, B01J 20/08, B01J 20/28, B01J 20/30

(54) **MASSE DE CAPTATION À POROSITÉ TRIMODALE POUR LA CAPTATION DES MÉTAUX LOURDS**
SORPTIONSMASSE MIT TRIMODALER POROSITÄT FÜR SCHWERMETALLEAUFNAHME
TRAPPING MASS WITH TRIMODAL POROSITY FOR TRAPPING HEAVY METALS

(30) Priorité: 13.06.2014 FR 1455436
(43) Date de publication de la demande: 19.04.2017
(73) Titulaire: IFP Energies nouvelles, 92500 Rueil-Malmaison (FR)
(72) Inventeur: BARTHELET, Karin, 69007 Lyon (FR); BOUALLEG, Malika, 69100 Villeurbanne (FR); BOUVRY, Céline, 92500 Rueil-Malmaison (FR); PORCHERON, Fabien, 69780 Mions (FR)
(74) Mandataire: IFP Energies nouvelles
(86) Numéro de dépôt international: PCT/EP2015/062814
(87) Numéro de publication internationale: WO 2015/189188

(56) Documents cités:
- WO-A1-2005/028106
- WO-A1-2011/021024
- FR-A1- 2 764 214
- FR-A1- 2 980 722
- US-A- 4 555 394
- US-A1- 2009 060 811

## Description

### DOMAINE DE L'INVENTION

La présente invention se situe dans le domaine du traitement d'effluents liquides ou gazeux contenant des métaux lourds. Plus précisément, l'invention concerne une masse de captation de métaux lourds, et notamment du mercure, présents dans un effluent gazeux ou liquide, ses procédés de préparation et sa mise en oeuvre dans un procédé de captation de métaux lourds.

Le mercure est un contaminant métallique que l'on trouve dans des hydrocarbures gazeux ou liquides. L'élimination du mercure des hydrocarbures est souhaitée au niveau industriel pour plusieurs raisons.

D'une part, la présence de mercure dans ces hydrocarbures fait courir des risques aux opérateurs travaillant au contact de ces produits, car le mercure est toxique.

D'autre part, la présence de mercure dans les hydrocarbures est nuisible aux catalyseurs utilisés dans les opérations classiques de traitement servant à valoriser ces hydrocarbures. Enfin, la présence de traces de mercure dans les opérations d'exploitation du gaz naturel mène à des phénomènes de corrosion dans les installations.

Industriellement, l'élimination du mercure des effluents gazeux ou liquides est réalisée par une circulation de l'effluent à traiter au travers de lits de garde remplis de matériaux adsorbants, autrement appelés masses de captation. L'impureté à éliminer, ici le mercure, est alors retenue irréversiblement (de manière préférée par chimisorption) au sein ou à la surface de la masse de captation et l'effluent évacué du lit de masse de captation est alors purifié.

Les masses de captation usuellement employées dans les procédés de décontamination des charges (désarsenification et démercurisation) sont composées d'un support à porosité contrôlée sur lequel est déposé au moins un oxyde ou au moins un sulfure des métaux du groupe constitué par le cuivre, le molybdène, le tungstène, le fer, le nickel, le cobalt ou le zinc.

Parmi les sulfures métalliques, le sulfure de cuivre est notamment utilisé du fait de sa stabilité et de son faible coût de fabrication. Le document de brevet US 7 645 306 décrit le fait que le mercure élémentaire (Hg°) présent dans une phase fluide gazeuse ou liquide réduit le sulfure de cuivre CuS de manière irréversible selon la réaction suivante :

Hg° + 2 CuS → Cu₂S + HgS

Le mercure est ainsi piégé sous forme de HgS, appelé cinnabre ou métacinnabre, dans la masse de captation et l'effluent à traiter est purifié. D'autres masses de captation contenant un support alumine et du sulfure de cuivre sont par exemple décrites dans le brevet US 4 094 777 ou encore dans le brevet FR 2 980 722.

Pour ce type de solides, le bon fonctionnement est fortement dépendant de leur porosité, et plus particulièrement de leur distribution poreuse. Lors du traitement de charge gazeuse, l'utilisation de masses de captation ayant des diamètres de pores mal appropriés peut conduire à des phénomènes de condensation capillaire lorsque les charges sont mal séchées ou lorsqu'elles contiennent des hydrocarbures lourds « condensables ». D'autre part, lors du traitement de charges liquides, la masse de captation doit présenter un profil de porosité particulièrement adapté aux contraintes diffusionnelles spécifiques à la décontamination de métaux lourds des charges.

Le brevet FR 2 980 722 propose d'utiliser une masse de captation à base d'un support purement mésoporeux de type alumine gel et d'une phase active constituée par un sulfure métallique. Le support présente une distribution poreuse monomodale. Ce type de porosité présente l'avantage de développer une surface spécifique importante, mais implique en contrepartie une sensibilité plus élevée aux problèmes de condensation capillaire, c'est-à-dire à la formation de phases liquides dans les pores du support solide si l'effluent gazeux contient des composés dits « condensables » (eau, hydrocarbures...) et une moins bonne diffusivité du mercure que dans des pores plus larges. Cette masse de captation est préparée par imprégnation du support d'alumine par une solution d'un précurseur de métal, suivie d'une maturation, d'un séchage, éventuellement d'une calcination, puis d'une sulfuration. Le brevet FR 2 764 214 décrit une masse de captation à base d'un support extrudé essentiellement à base d'une alumine issue de la déshydratation rapide d'hydrargillite (aussi appelé alumine flash) et éventuellement un oxyde ou un sulfure des métaux du groupe constitué par le cuivre, le molybdène, le tungstène, le fer, le nickel ou le cobalt. Le support présente une répartition poreuse qui minimise la proportion de micropores (< 6 nm) et de macropores (> 100 nm) tout en augmentant la proportion des mésopores. Le support présente une distribution poreuse au plus bimodale, voire préférentiellement monomodale. Le diamètre moyen des mésopores est compris entre 15 et 36 nm. Ces masses de captation sont préparées soit par la technique d'imprégnation du support par une solution d'un précurseur de métal, soit par la technique du comalaxage.

Cependant, pour ces masses de captation à base de sulfures métalliques classiquement préparées en déposant un précurseur métallique sous forme oxyde, tel que par exemple CuO, sur un support, par exemple par imprégnation, puis en effectuant une étape de sulfuration pour transformer l'oxyde métallique en sulfure métallique, il a été constaté qu'au-delà d'une certaine teneur, la capacité de rétention des métaux lourds par la masse de captation préparée selon la technique de l'imprégnation ne s'améliorait que peu ou plus malgré l'augmentation de la teneur en phase active. Cela peut être expliqué par le fait qu'au-delà d'une certaine quantité de phase active, les cristallites d'oxyde de cuivre ont tendance à s'agglomérer en amas plus gros. Ceci peut rendre une partie de la phase active inaccessible et également entraîner un bouchage partiel de la porosité, d'où une détérioration du transfert de matière. Il est donc difficile d'obtenir des matériaux adsorbants ayant une grande capacité de rétention des métaux lourds. Par ailleurs, plus la quantité de phase active déposée augmente, plus le volume poreux diminue, entraînant à terme une moins bonne diffusion des métaux lourds à travers le réseau poreux de la masse de captation.

De plus, la préparation de ces masses de captation implique de préparer et de mettre en forme le support puis de l'imprégner de la phase active ce qui implique l'enchaînement de nombreuses étapes, i.e. imprégnation, maturation, séchage, calcination éventuelle, puis sulfuration, ce qui augmente les coûts de fabrication associés. Et, lorsqu'on souhaite préparer des masses de captation ayant une grande capacité de rétention des métaux lourds, c'est-à-dire des masses de captation ayant une forte teneur en sulfures métalliques, plusieurs imprégnations successives sont souvent nécessaires pour obtenir ces masses de captation.

Pour remédier à ces limitations, il est possible de considérer des masses de captation dites massiques comme celles décrites dans le brevet WO2008/020250. Dans ce cas de figure, l'adsorbant est obtenu par co-granulation d'un ou plusieurs oxydes métalliques ou précurseurs d'oxydes métalliques avec un liant tel que du ciment pour assurer la cohésion mécanique du solide. Le précurseur ainsi obtenu est ensuite sulfuré pour obtenir la masse de captation active. Cependant, ce type de matériau présente une faible porosité ce qui entraine souvent une sulfuration incomplète et une distribution poreuse monomodale constituée presque uniquement de larges mésopores d'où une chute de la tenue mécanique du solide et donc la formation de fines au cours de son chargement et/ou de son utilisation.

### BREVE DESCRIPTION DE L'INVENTION

Dans ce contexte, un des objectifs de la présente invention est de proposer une masse de captation ne présentant pas les inconvénients des matériaux adsorbants de l'art antérieur, ayant avantageusement une grande capacité de rétention des métaux lourds, et permettant de traiter des effluents liquides et gazeux, même humides, avec une bonne durée de vie tout en gardant une bonne résistance mécanique sans ajouter de liants.

Plus particulièrement, la présente invention décrit une masse de captation pour la captation des métaux lourds dans un effluent liquide ou gazeux, comprenant une matrice oxyde majoritairement aluminique calcinée ayant une teneur en alumine supérieure ou égale à 90 % poids par rapport à ladite matrice et une phase active comprenant au moins un sulfure métallique dont le métal est choisi dans le groupe constitué par le cuivre, le chrome, le manganèse, le fer, le cobalt et le nickel, ladite phase active étant entièrement co-malaxée au sein de ladite matrice oxyde majoritairement aluminique calcinée, le pourcentage poids du ou des métaux de la phase active, exprimé par rapport aux poids total de la masse de captation étant compris entre 4 et 55 %, ladite masse étant caractérisée par une distribution en taille de pores trimodale et dans laquelle le volume représenté par les pores ayant un diamètre supérieur à 3,6 nm et inférieur ou égal à 20 nm représente entre 30 et 60% du volume poreux total, le volume représenté par les pores ayant un diamètre supérieur à 20 nm et inférieur ou égal à 100 nm représente entre 20 et 45% du volume poreux total, le volume représenté par les pores ayant un diamètre supérieur à 100 nm représente entre 10 et 40% du volume poreux total.

La demanderesse a découvert que le co-malaxage d'une matrice oxyde majoritairement aluminique calcinée issue de gels d'alumine particuliers préparés selon des procédés de préparation décrits ci-après avec une phase active comprenant au moins un sulfure métallique dont le métal est choisi dans le groupe constitué par le cuivre, le chrome, le manganèse, le fer, le cobalt et le nickel, permet l'obtention d'une masse de captation à grand volume poreux qui présente une distribution poreuse particulière et différente des masses de captation selon l'art antérieur, notamment une distribution trimodale qui est particulièrement adaptée pour la captation de métaux lourds. En effet, elle permet de favoriser la diffusion du mercure et sa réaction avec la phase active tout en permettant de garder une bonne tenue mécanique.

Il est important de souligner que la masse de captation selon l'invention se distingue structurellement d'une masse obtenue par imprégnation d'un ou plusieurs précurseurs de la phase active sur un support d'alumine dans laquelle l'alumine forme le support et la phase active est introduite dans les pores de ce support. Sans vouloir être lié par une quelconque théorie, il apparaît que le procédé de préparation de la masse de captation selon l'invention par co-malaxage d'une matrice oxyde majoritairement aluminique calcinée particulière avec un ou plusieurs précurseurs de métaux de la phase active permet d'obtenir un composite dans lequel la phase active et ladite matrice sont intimement mélangées formant ainsi la structure même de la masse de captation avec une porosité adaptée à la captation de métaux lourds, notamment du mercure.

En plus de pouvoir être synthétisée à moindre coût grâce à la réduction du nombre d'étapes, la masse de captation selon l'invention présente la particularité de pouvoir contenir des quantités élevées de précurseur de phase active entièrement accessible à la sulfuration et de phase active entièrement accessible aux métaux à capter tout en gardant un grand volume poreux et une bonne résistance mécanique.

Le fait de préparer la masse de captation selon l'invention par co-malaxage permet de pouvoir fortement charger cette masse en précurseur de phase active qui est entièrement accessible à la sulfuration et donc en phase active qui est entièrement accessible aux métaux à capter, tout en évitant, comparativement à une imprégnation, tout risque de diminution du volume poreux, voire de bouchage partiel de la porosité du support lors du dépôt de la phase active et donc l'apparition des limitations diffusionnelles des éléments à capter tels que le mercure.

De manière astucieuse, la demanderesse a mis en évidence que la capacité d'adsorption à saturation et/ou la cinétique d'adsorption de métaux lourds des masses de captation selon l'invention sont supérieures à celles des masses de captation possédant une population de pores mono- ou bimodale, même à forte teneur en phase active, tout en montrant une bonne résistance mécanique à l'écrasement.

Selon une variante préférée, le sulfure métallique est le sulfure de cuivre.

Ladite matrice a une teneur en alumine supérieure ou égale à 90 % poids par rapport à ladite matrice.

Selon une variante, ladite matrice représente entre 17% et 94% en poids du poids total de la masse de captation.

La phase active est entièrement co-malaxée.

Selon une variante, ladite masse de captation a un volume poreux total compris entre 0,35 cm³.g⁻¹ et 1,5 cm³.g⁻¹, et une surface spécifique comprise entre 50 m².g⁻¹ et 450 m².g⁻¹. L'invention a également pour objet deux procédés de préparation de ladite masse de captation grâce auxquels la distribution trimodale de la masse de captation est obtenue.

L'invention a également pour objet un procédé de captation de métaux lourds dans un effluent gazeux, éventuellement humide, ou liquide, dans lequel ledit effluent est mis en contact avec ladite masse de captation. Selon une variante préférée, l'effluent gazeux ou liquide à traiter contient du mercure. Selon une variante préférée, le taux d'hygrométrie de l'effluent gazeux est compris entre 0% et 99%.

### DESCRIPTION DETAILLEE DE L'INVENTION

Les propriétés texturales et structurales de la masse de captation sont déterminées par les méthodes de caractérisation connues de l'homme du métier.

Le volume poreux total et la distribution poreuse sont déterminés par porosimétrie au mercure (cf. Rouquerol F.; Rouquerol J.; Singh K. « Adsorption by Powders & Porous Solids: Principle, methodology and applications », Academic Press, 1999). Plus particulièrement, le volume poreux total est mesuré par porosimétrie au mercure selon la norme ASTM D4284-92 avec un angle de mouillage de 140°, par exemple au moyen d'un appareil modèle Autopore III™ de la marque Microméritics™.

On entend par distribution poreuse x-modale une distribution caractérisée par une courbe de dérivée de la distribution en volume du diamètre des pores possédant x pics distincts (dVolume/dLogDiamètre=f(Diamètre)). Une distribution poreuse trimodale se caractérise par la présence de trois pics sur la courbe de dérivée de la distribution en volume du diamètre des pores (dVolume/dLogDiamètre=f(Diamètre)), alors qu'une distribution mono- ou bimodale se caractérise par la présence d'un pic unique ou de deux pics sur la courbe de dérivée de la distribution en volume du diamètre des pores (dVolume/dLogDiamètre=f(Diamètre)).

Dans la présente description, on entend, selon la convention IUPAC, par micropores les pores dont le diamètre est inférieur à 2 nm (0,002 µm), par mésopores les pores dont le diamètre est compris entre 2 nm (0,002 µm) et 50 nm (0,05 µm), bornes incluses et par macropores les pores dont le diamètre est supérieur à 50 nm (0,05 µm).

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society », 60, 309, (1938).

### Masse de captation

La masse de captation selon l'invention se présente sous la forme d'un composite comprenant une matrice oxyde majoritairement aluminique calcinée ayant une teneur en alumine supérieure ou égale à 90 % poids par rapport à ladite matrice au sein duquel sont répartis le ou les métau(x) de la phase active. Ladite phase active est entièrement co-malaxée au sein de ladite matrice oxyde majoritairement aluminique calcinée.

La phase active de la masse de captation selon l'invention comprend des sulfures métalliques qui réagissent avec les métaux lourds à éliminer. Le ou les sulfures métalliques contenus dans la masse de captation selon l'invention sont à base d'un métal choisi dans le groupe constitué par le cuivre, le chrome, le manganèse, le fer, le cobalt et le nickel. De manière préférée, le ou les métaux du ou des sulfures métalliques sont choisis dans le groupe constitué par le cuivre, le manganèse, le fer et le nickel. De manière très préférée, si un seul sulfure métallique est présent, le choix se porte sur le sulfure de cuivre.

L'expression « sulfure de cuivre » désigne dans la présente demande les composés chimiques de type CuₓS_{y}, avec 0,5 ≤ x/y <2, de préférence, x = 1 et y = 1. De manière préférée, l'expression « sulfure de cuivre » désigne du CuS.

Selon un mode de réalisation de la présente invention, les seuls métaux présents dans la phase active de la masse de captation selon l'invention peuvent être le cuivre, le chrome, le manganèse, le fer, le cobalt et le nickel. La masse de captation selon l'invention peut donc être exempte d'autres métaux tels que le zinc.

Le pourcentage poids total du ou des métaux de la phase active, exprimé par rapport au poids total de la masse de captation, est compris entre 4 % et 55%, préférentiellement entre 5% et 45%, et plus préférentiellement entre 8% et 40%. Les valeurs « % poids » se basent sur la forme élémentaire du ou des métaux.

Le pourcentage poids de soufre exprimé par rapport au poids de la masse de captation peut être compris entre 1,5% et 28%, préférentiellement entre 2 et 23%, plus préférentiellement entre 3,5 et 20,5%.

La masse de captation selon l'invention comprend une matrice oxyde majoritairement aluminique calcinée. Ladite matrice a une teneur en alumine calcinée supérieure ou égale à 90 % poids par rapport au poids total de ladite matrice, éventuellement complétée par de la silice et/ou du phosphore à une teneur totale d'au plus 10% poids en équivalent SiO₂ et/ou P₂O₅, de préférence inférieure à 5% poids, et de manière très préférée inférieure à 2% poids par rapport au poids total de ladite matrice. La silice et/ou le phosphore peuvent être introduits par toute technique connue de l'homme du métier, lors de la synthèse du gel d'alumine ou lors du comalaxage. De manière encore plus préférée, la matrice oxyde majoritairement aluminique calcinée est constituée d'alumine.

De manière préférée, l'alumine présente dans ladite matrice est une alumine de transition telle qu'une alumine gamma, delta, thêta, chi, rho ou êta, seule ou en mélange. De manière plus préférée, l'alumine est une alumine de transition gamma, delta ou thêta, seule ou en mélange.

La somme du poids de la matrice et de la phase active représente avantageusement 100 % du poids de ladite masse de captation.

La matrice oxyde majoritairement aluminique calcinée représente entre 17% et 94%, préférentiellement entre 32% et 93%, plus préférentiellement entre 39% et 88% en poids du poids total de la masse de captation selon l'invention. Ce pourcentage ne correspond pas au complément à 100% de pourcentage poids total du ou des métaux de la phase active, car celle-ci est sous forme sulfure(s) et non sous forme d'un ou plusieurs métaux élémentaires.

À titre d'exemple, une masse de captation selon l'invention qui a une teneur en phase active de 10% poids de cuivre, a une teneur en sulfure de cuivre CuS de 15% poids, soit le pourcentage poids en cuivre divisé par sa masse molaire et multiplié par celle du sulfure de cuivre (même nombre de moles en cuivre et en sulfure de cuivre). En faisant l'hypothèse que la phase active à base de cuivre est entièrement sous forme de sulfure de cuivre, on peut déterminer le pourcentage poids de matrice aluminique qui est 85% poids (100% - %poids de CuS).

La masse de captation selon l'invention a un volume poreux total compris entre 0,35 cm³.g⁻¹ et 1,5 cm³.g⁻¹, préférentiellement entre 0,45 cm³.g⁻¹ et 1,2 cm³.g⁻¹.

La masse de captation selon l'invention a une surface spécifique comprise entre 50 m².g⁻¹ et 450 m².g⁻¹, préférentiellement entre 60 m².g⁻¹ et 350 m².g⁻¹, plus préférentiellement entre 70 m².g⁻¹ et 320 m².g⁻¹, et encore plus préférentiellement entre 70 m².g⁻¹ et 300 m².g⁻¹.

La masse de captation selon l'invention présente une distribution poreuse trimodale. En effet, la détermination de la distribution poreuse obtenue par la méthode de porosimétrie au mercure met en évidence une tri-population de pores constituant le solide.

La courbe dérivée de la distribution en volume du diamètre des pores (dVolume/dLogDiamètre = f(Diamètre)) présente ainsi :
- un premier pic centré sur une valeur supérieure à 3,6 nm et inférieure ou égale à 20 nm, de préférence entre 5 et 18 nm, et de manière encore préférée entre 9 et 17 nm (aussi appelé population de bas mésopores),
- un deuxième pic centré sur une valeur supérieure à 20 nm et inférieure ou égale à 100 nm, de manière préférée entre 25 et 85 nm et de manière encore préférée de 30 à 75 nm (aussi appelé population de pores hybrides méso-macroporeux) et
- un troisième pic centré sur une valeur supérieure à 100 nm, de manière préférée entre 105 et 1000 nm et de manière très préférée entre 110 et 500 nm (aussi appelé population de pores macroporeux).

Cette distribution poreuse est caractérisée en ce sens que :
- le volume représenté par les pores ayant un diamètre supérieur à 3,6 nm et inférieur ou égal à 20 nm représente entre 30 et 60% du volume poreux total,
- le volume représenté par les pores ayant un diamètre supérieur à 20 nm et inférieur ou égal à 100 nm représente entre 20 et 45% du volume poreux total,
- le volume représenté par les pores ayant un diamètre supérieur à 100 nm représente entre 10 et 40% du volume poreux total.

Il est entendu que la somme des volumes représentés par les pores des trois différentes populations est égale à 100 %.

La masse de captation selon l'invention présente notamment une population de pores hybrides compris dans le domaine méso/macroporeux. La présence de cette population de pores permet d'améliorer la diffusion du mercure dans le milieu poreux tout en augmentant la résistance mécanique à l'écrasement. En effet, il est bien connu de l'homme du métier que la présence trop importante de macropores pénalise la tenue mécanique de l'adsorbant. Ces pores sont néanmoins nécessaires pour faciliter la pénétration de l'effluent dans le réseau poreux et l'accessibilité du mercure à la phase active. La présence de mésopores et notamment de bas mésopores améliore la résistance mécanique, mais peut ralentir l'accès du mercure à la phase active dans les phases hydrocarbures liquides. En phase gaz, la présence uniquement de mésopores rend l'adsorbant plus sensible aux entrainements éventuels de liquides. La présence d'une population de pores hybrides méso/macroporeux dans la masse de captation selon l'invention permet donc de rassembler les avantages en termes de tenue mécanique et d'accessibilité du mercure à la phase active.

La masse de captation peut se présenter sous différentes formes, en particulier sous forme divisée. Avantageusement, ladite masse peut se présenter sous la forme d'une pluralité d'éléments, chaque élément ayant la forme de bille, de cylindre, d'extrudé multilobé, de roue de charrette, de cylindre creux ou toute autre forme géométrique utilisée par l'homme du métier.

Selon un mode de réalisation, la masse de captation peut être sous la forme d'une pluralité d'extrudés multilobés dont le diamètre est compris entre 0,4 mm et 100 mm, préférentiellement entre 0,5 mm et 50 mm, et plus préférentiellement entre 0,5 mm et 10 mm, et de manière encore plus préférée entre 0,5 mm et 4 mm. De manière préférée, la masse de captation est sous la forme d'extrudés trilobés ou quadrilobés.

La masse de captation selon l'invention présente une bonne résistance mécanique. La masse de captation sous forme d'extrudés selon l'invention présente en général un écrasement grain à grain (EGG) d'au moins 0,5 daN/mm et généralement entre 0,5 daN/mm et 1,5 daN/mm, de préférence entre 0,67 daN/mm et 1 daN/mm pour des extrudés de diamètre 1,6 mm, de préférence d'au moins 1 mm.

La méthode de mesure de l'écrasement grain à grain (EGG) consiste à mesurer la force de compression maximale que peut supporter un extrudé avant sa rupture, lorsque le produit est placé entre deux plans se déplaçant à la vitesse constante de 5 cm/min. La compression est appliquée perpendiculairement à l'une des génératrices de l'extrudé, et l'écrasement grain à grain est exprimé comme le rapport de la force à la longueur de la génératrice de l'extrudé.

### Procédés de préparation

La présente invention a également pour objet deux procédés de préparation de la masse de captation selon l'invention.

La masse de captation selon l'invention est préparée par co-malaxage d'une matrice oxyde majoritairement aluminique calcinée obtenue à partir de gels d'alumine spécifiques et du ou des précurseur(s) de métaux. La distribution poreuse trimodale particulière observée dans la masse de captation est notamment due aux procédés de préparation à partir de gels d'alumine spécifiques.

Les procédés de préparation de la masse de captation selon l'invention comportent généralement dans un premier temps la préparation d'une poudre d'une matrice oxyde majoritairement aluminique calcinée à partir de gels d'alumine spécifiques, puis le malaxage de la poudre avec une solution comprenant au moins un précurseur de la phase active afin d'obtenir une pâte. Cette pâte est ensuite mise en forme, puis séchée, puis éventuellement soumise à un traitement thermique, puis sulfurée.

Les gels d'alumine sont préparés selon deux procédés de préparation détaillés ci-dessous. Les deux gels d'alumine permettent d'obtenir ladite masse de captation présentant la distribution poreuse trimodale.

Selon la première variante, ledit gel d'alumine est obtenu par un procédé comprenant une étape a1) de mise en solution d'un précurseur acide d'alumine, une étape b1) d'ajustement du pH de la suspension par ajout d'un précurseur basique, une étape c1) de précipitation d'un précurseur acide et d'un précurseur basique, au moins l'un des deux contenant de l'alumine et une étape d1) de filtration. A la fin de l'étape c1), la concentration en alumine finale dans la suspension doit être comprise entre 10 et 38 g/L, préférentiellement entre 13 et 35 g/L et plus préférentiellement entre 15 et 33 g/L.

Selon la deuxième variante, ledit gel d'alumine est obtenu par un procédé comprenant une première étape a2) de précipitation, une étape b2) de chauffage, une étape c2) de deuxième précipitation et une étape d2) de filtration.

### Premier procédé de préparation

Le premier procédé de préparation de la masse de captation selon l'invention comprend les étapes suivantes :
a1) une étape de mise en solution d'un précurseur acide d'aluminium choisi parmi le sulfate d'aluminium, le chlorure d'aluminium et le nitrate d'aluminium dans l'eau, à une température comprise entre 20 et 90°C, à un pH compris entre 0,5 et 5, pendant une durée comprise entre 2 et 60 minutes,
b1) une étape d'ajustement du pH par ajout dans la suspension obtenue à l'étape a1) d'au moins un précurseur basique choisi parmi l'aluminate de sodium, l'aluminate de potassium, l'ammoniaque, l'hydroxyde de sodium et l'hydroxyde de potassium, à une température comprise entre 20 et 90°C, et à un pH compris entre 7 et 10, pendant une durée comprise entre 5 et 30 minutes,
c1) une étape de co-précipitation de la suspension obtenue à l'issue de l'étape b1) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, le débit relatif des précurseurs acide et basique étant choisi de manière à obtenir un pH du milieu réactionnel compris entre 7 et 10 et le débit du ou des précurseurs acide et basique contenant de l'aluminium étant réglé de manière à obtenir une concentration en alumine finale dans la suspension comprise entre 10 et 38 g/L,
d1) une étape de filtration de la suspension obtenue à l'issue de l'étape c1) de co-précipitation pour obtenir un gel d'alumine,
e1) une étape de séchage dudit gel d'alumine obtenu à l'étape d1) pour obtenir une poudre,
f1) une étape de traitement thermique de la poudre obtenue à l'issue de l'étape e1) à une température comprise entre 500 et 1000°C, en présence ou non d'un flux d'air contenant jusqu'à 60 % en volume d'eau pour obtenir un oxyde poreux aluminique calciné,
g1) une étape de malaxage de l'oxyde poreux aluminique calciné obtenu à l'étape f1) avec une solution comprenant au moins un précurseur du ou des métaux choisi(s) dans le groupe constitué par le cuivre, le chrome, le manganèse, le fer, le cobalt et le nickel pour obtenir une pâte,
h1) une étape de mise en forme de la pâte obtenue,
i1) une étape de séchage de la pâte mise en forme à une température inférieure à 200°C, de manière à obtenir un précurseur séché de ladite masse de captation,
j1) éventuellement une étape de traitement thermique dudit précurseur séché à une température comprise entre 200 et 1500°C en présence ou non d'eau,
k1) une étape de sulfuration dudit précurseur obtenu à l'étape i1) ou j1) de manière à obtenir ladite masse de captation.

### Étape a1) Mise en solution

L'étape a1) est une étape de mise en solution d'un précurseur acide d'aluminium choisi parmi le sulfate d'aluminium, le chlorure d'aluminium et le nitrate d'aluminium dans l'eau, à une température comprise entre 20 et 90°C, à un pH compris entre 0,5 et 5, pendant une durée comprise entre 2 et 60 minutes. L'étape a1) est réalisée à une température comprise entre 20 et 90°C, de manière préférée entre 20 et 75 °C et de manière plus préférée entre 30 et 70°C. Le pH de la suspension obtenue est compris entre 0,5 et 5, de préférence entre 1 et 4, de manière préférée entre 1,5 et 3,5. Cette étape contribue avantageusement à une quantité d'alumine introduite par rapport à l'alumine finale comprise entre 0,5 et 4%, de préférence entre 1 et 3%, de manière très préférée entre 1,5 et 2,5%. La suspension est laissée sous agitation pendant une durée comprise entre 2 et 60 minutes, et de préférence entre 5 et 30 minutes.

### Étape b1) Ajustement du pH

L'étape b1) d'ajustement du pH consiste en l'ajout dans la suspension obtenue à l'étape a1) d'au moins un précurseur basique choisi parmi l'aluminate de sodium, l'aluminate de potassium, l'ammoniaque, l'hydroxyde de sodium et l'hydroxyde de potassium.

De manière préférée, le précurseur basique est un précurseur d'alumine choisi parmi l'aluminate de sodium et l'aluminate de potassium. De manière très préférée, le précurseur basique est l'aluminate de sodium.

L'étape b1) est réalisée à une température comprise entre 20 et 90°C, de manière préférée comprise entre 20 et 80°C et de manière plus préférée entre 30 et 70°C et à un pH compris entre 7 et 10, de préférence entre 8 et 10, de manière préférée entre 8,5 et 10 et de manière très préférée entre 8,7 et 9,9. La durée de l'étape b1) d'ajustement du pH est comprise entre 5 et 30 minutes, de préférence entre 8 et 25 minutes, et de manière très préférée entre 10 et 20 minutes.

### Étape c1) Précipitation

L'étape c1) est une étape de co-précipitation par mise en contact, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, lesdits précurseurs étant choisis identiques ou non aux précurseurs introduits aux étapes a1) et b1). Le débit relatif des précurseurs acide et basique est choisi de manière à obtenir un pH du milieu réactionnel compris entre 7 et 10 et le débit du ou des précurseurs acide et basique contenant de l'aluminium est réglé de manière à obtenir une concentration en alumine finale dans la suspension comprise entre 10 et 38 g/L, préférentiellement entre 13 et 35 g/L et plus préférentiellement entre 15 et 33 g/L.

Le ou les précurseur(s) basique(s) et acide(s) sont ajoutés dans l'étape c1) en solution aqueuse. De manière préférée, l'étape de précipitation est conduite à une température comprise entre 20 et 90°C, et de manière plus préférée entre 30 et 70°C.

L'étape c1) de précipitation est réalisée à un pH compris entre 7 et 10, de préférence entre 8 et 10, de manière préférée entre 8,5 et 10 et de manière très préférée entre 8,7 et 9,9.

L'étape c1) de précipitation est réalisée pendant une durée comprise entre 1 et 60 minutes, et de manière préférée comprise entre 5 et 45 minutes.

De préférence, lesdites étapes a1), b1), et c1) sont réalisées en milieu réactionnel aqueux, de préférence dans de l'eau, et en l'absence d'additif organique. De préférence les étapes a1), b1) et c1) sont opérées sous agitation.

### Étape d1) Filtration

Le procédé de préparation de l'alumine selon l'invention comprend également une étape d1) de filtration de la suspension obtenue à l'issue de l'étape c1) de manière à obtenir un gel d'alumine. Ladite étape de filtration est réalisée selon les méthodes connues de l'homme du métier.

Ladite étape de filtration est avantageusement suivie d'au moins une étape de lavage, de préférence à l'eau et de préférence d'une à trois étapes de lavage, avec une quantité d'eau égale à la quantité de précipité filtré.

### Etape e1) Séchage du gel d'alumine

Conformément à l'invention, le gel d'alumine obtenu à l'issue de l'étape c1) de précipitation, suivie d'une étape de filtration d1), est séché dans une étape e1) de séchage pour obtenir une poudre. Ladite étape de séchage est généralement mise en oeuvre à une température supérieure ou égale à 120°C ou par atomisation ou par toute autre technique de séchage connue de l'homme du métier.

Dans le cas où ladite étape e1) de séchage est mise en oeuvre par séchage à une température supérieure ou égale à 120°C, ladite étape e1) de séchage peut avantageusement être réalisée en étuve fermée et ventilée. De préférence ladite étape de séchage opère à une température comprise entre 120 et 300°C, de manière très préférée à une température comprise entre 150 et 250°C.

Dans le cas où ladite étape e1) de séchage est mise en oeuvre par atomisation, le gâteau obtenu à l'issue de l'étape de deuxième précipitation, suivie d'une étape de filtration, est remis en suspension. Ladite suspension est ensuite pulvérisée en fines gouttelettes, dans une enceinte cylindrique verticale au contact d'un courant d'air chaud afin d'évaporer l'eau selon le principe bien connu de l'homme du métier. La poudre obtenue est entrainée par le flux de chaleur jusqu'à un cyclone ou un filtre à manche qui va séparer l'air de la poudre.

De préférence, dans le cas où ladite étape e1) de séchage est mise en oeuvre par atomisation, l'atomisation est réalisée selon le protocole opératoire décrit dans la publication Asep Bayu Dani Nandiyanto, Kikuo Okuyama, Advanced Powder Technology, 22, 1-19, 2011.

### Etape f1) Traitement thermique de la poudre obtenue à l'issue de l'étape e1)

Conformément à l'invention, la poudre obtenue à l'issue de l'étape e1) de séchage est soumise à une étape f1) de traitement thermique à une température comprise entre 500 et 1000°C, pendant une durée avantageusement comprise entre 2 et 10 heures, en présence ou non d'un flux d'air contenant jusqu'à 60% en volume d'eau pour obtenir un oxyde poreux aluminique calciné.

De préférence, ledit traitement thermique est effectué en présence d'un flux d'air contenant de l'eau. De préférence, ladite étape f1) de traitement thermique opère à une température comprise entre 540°C et 850°C. De préférence, ladite étape f1) de traitement thermique opère pendant une durée comprise entre 2 et 10 heures.

Ladite étape f1) de traitement thermique permet la transition de la boehmite vers l'alumine finale. L'alumine présente une structure cristallographique du type alumine de transition gamma, delta, thêta, chi, rho ou êta, seule ou en mélange. De manière plus préférée, l'alumine est une alumine de transition gamma, delta ou thêta, seule ou en mélange. L'existence des différentes structures cristallographiques est liée aux conditions de mises en oeuvre de l'étape f1) de traitement thermique.

### Etape g1) Co-malaxage

Dans cette étape, l'oxyde poreux aluminique calciné obtenu à l'étape f1) est malaxée avec une solution comprenant au moins un précurseur du ou des métaux choisi(s) dans le groupe constitué par le cuivre, le chrome, le manganèse, le fer, le cobalt et le nickel pour obtenir une pâte.

La solution est de préférence une solution aqueuse comprenant au moins un précurseur de métal à l'état dissous. Les précurseurs de métaux peuvent être n'importe quel sel métallique soluble dans l'eau. Les précurseurs de métaux peuvent notamment être choisis dans le groupe constitué par les acétates métalliques, les nitrates métalliques, les hydroxydes métalliques, les carbonates métalliques et leurs mélanges. De préférence, les précurseurs de métaux sont des nitrates métalliques. Selon une variante particulièrement préférée le précurseur de cuivre est le nitrate de cuivre.

Les quantités des précurseurs de métaux introduites dans la solution sont choisies de telle manière que le pourcentage poids total en métaux, exprimé par rapport au poids total de la masse de captation, est compris entre 4 % et 55%, préférentiellement entre 5% et 45%, et plus préférentiellement entre 8% et 40%.

Tout autre composant ou additif de ladite masse, par exemple de la silice ou du phosphore, par exemple sous forme d'acide phosphorique, peut être introduit dans la cuve de malaxage pendant l'étape g1) de co-malaxage ou dans la solution contenant le ou les sels métalliques des précurseurs de la phase active.

Le comalaxage se déroule avantageusement dans un malaxeur, par exemple un malaxeur de type "Brabender" bien connu de l'homme du métier. La poudre d'alumine calcinée obtenue à l'étape f1) et un ou plusieurs éventuels additifs sont placés dans la cuve du malaxeur. Ensuite la solution de précurseurs de métaux contenant éventuellement un ou plusieurs additifs, et éventuellement de l'eau permutée sont ajoutées par exemple à la seringue pendant quelques minutes, typiquement environ 2 minutes à une vitesse de malaxage donnée, par exemple environ 15 tr/min. Après l'obtention d'une pâte, le malaxage peut être poursuivi pendant quelques minutes, par exemple environ 15 minutes à 50 tr/min.

### Etape h1) Mise en forme

La pâte obtenue à l'issue de l'étape de co-malaxage g1) est ensuite mise en forme selon toute technique connue de l'homme du métier, par exemple les méthodes de mise en forme par extrusion, par pastillage, par la méthode de la goutte d'huile (égouttage ou oil-drop selon la terminologie anglo-saxonne), ou par granulation au plateau tournant.

De préférence, ladite pâte utilisée selon l'invention est mise en forme par extrusion sous forme d'extrudés de diamètre généralement compris entre 0,4 et 100 mm et de préférence 0,5 et 50 mm, et de manière particulièrement préférée entre 0,5 et 4 mm. Ces extrudés peuvent être de forme cylindrique ou multilobée. Selon une variante préférée, les extrudés sont de forme trilobe ou quadrilobe.

De manière très préférée, ladite étape g1) de co-malaxage et ladite étape h1) de mise en forme sont réunies en une seule étape de malaxage-extrusion. Dans ce cas, la pâte obtenue à l'issue du malaxage peut être introduite dans un extrudeuse piston au travers d'une filière ayant le diamètre souhaité, typiquement entre 0,5 et 50 mm.

### Etape i1) Séchage de la pâte mise en forme

Conformément à l'invention, la pâte obtenue à l'issue des étapes g1) de co-malaxage et h1) de mise en forme subit un séchage i1) à une température inférieure à 200°C, de préférence inférieure à 150°C, et de préférence comprise entre 70 et 150°C selon toute technique connue de l'homme du métier, pendant une durée typiquement comprise entre 2 et 12 heures. Le séchage est effectué sous air, ou sous atmosphère inerte (azote par exemple). On obtient un précurseur séché de la masse de captation.

### Etape j1) Traitement thermique (optionnelle)

Le précurseur séché de ladite masse de captation peut ensuite subir une étape complémentaire de traitement thermique j1) à une température comprise entre 200 et 1500°C, de préférence entre 400 et 1300°C et de manière encore plus préférée entre 600 et 1000°C, pendant une durée généralement comprise entre 1 et 10 heures, en présence ou non d'eau. Plusieurs cycles combinés de traitements thermiques peuvent être réalisés.

Dans le cas où de l'eau serait ajoutée lors de l'étape du traitement thermique, le contact avec la vapeur d'eau peut se dérouler à pression atmosphérique (steaming selon la terminologie anglo-saxonne) ou en pression autogène (autoclavage). En cas de « steaming » la teneur en eau est de préférence comprise entre 150 et 900 grammes par kilogramme d'air sec, et de manière encore plus préférée, entre 250 et 650 grammes par kilogramme d'air sec.

### Etape k1) Sulfuration

Le précurseur séché dans l'étape i1) ou traité thermiquement dans l'étape j1) de ladite masse de captation est par la suite sulfuré de manière à transformer le ou les précurseurs de la phase active en sulfures métalliques qui réagissent avec les métaux lourds dans un effluent liquide ou gazeux.

L'étape de sulfuration peut être conduite ex-situ ou in-situ, c'est-à-dire hors ou à l'intérieur du dispositif de captation des métaux lourds contenant la masse de captation, qui va être utilisée pour capter les métaux lourds d'un effluent. De manière préférée, l'étape de sulfuration est conduite en phase gazeuse ex-situ. L'étape de sulfuration peut aussi être réalisée in-situ si l'effluent à traiter contient des composés soufrés.

L'étape de sulfuration peut être réalisée selon toute méthode connue de l'homme du métier, conduisant à la formation de sulfures métalliques réactifs vis-à-vis des métaux lourds, et en particulier du mercure. L'apport de soufre est généralement réalisé à l'aide de sulfure d'hydrogène, de soufre élémentaire ou à l'aide d'un précurseur organo-soufré connu de l'homme du métier. L'étape de sulfuration peut être effectuée en phase gazeuse ou en phase liquide, en fonction du type de précurseur de soufre utilisé.

L'étape de sulfuration peut avantageusement être réalisée en phase gazeuse à l'aide d'un gaz contenant du sulfure d'hydrogène. En particulier, il est possible d'utiliser un mélange gazeux d'azote et de sulfure d'hydrogène dont la concentration molaire en sulfure d'hydrogène peut être comprise entre 1000 ppm et 10%, et préférentiellement entre 0,5% et 6%, à une température pouvant être comprise entre 50°C et 400°C, et préférentiellement entre 80°C et 250°C. Préférentiellement, l'étape de sulfuration peut être effectuée à pression atmosphérique.

L'étape de sulfuration peut être caractérisée par le fait qu'elle transforme au moins 50%, de préférence au moins 80%, et plus préférentiellement au moins 90%, et de manière particulièrement préférée au moins 95% du ou des précurseurs métalliques en sulfures métalliques.

On obtient ainsi la masse de captation selon l'invention.

### Deuxième procédé de préparation

Le deuxième procédé de préparation de la masse de captation selon l'invention comprend les étapes suivantes :
a2) une première étape de précipitation, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent Al₂O₃ lors de ladite première étape de précipitation par rapport à la quantité totale d'alumine formée en équivalent Al₂O₃ à l'issue de l'étape c2) du procédé de préparation, ladite étape opérant à une température comprise entre 20 et 90°C et pendant une durée comprise entre 2 et 30 minutes,
b2) une étape de chauffage de la suspension obtenue à l'étape a2) à une température comprise entre 40 et 90°C pendant une durée comprise entre 7 et 45 minutes pour obtenir un gel d'alumine,
c2) une deuxième étape de précipitation de la suspension obtenue à l'issue de l'étape de chauffage b2) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95 %, le taux d'avancement étant défini comme étant la proportion d'alumine formée en équivalent Al₂O₃ lors de ladite deuxième étape de précipitation par rapport à la quantité totale d'alumine formée en équivalent Al₂O₃ à l'issue de l'étape c2) du procédé de préparation, ladite étape opérant à une température comprise entre 40 et 90°C et pendant une durée comprise entre 2 et 50 minutes,
d2) une étape de filtration de la suspension obtenue à l'issue de l'étape c2) de deuxième précipitation pour obtenir un gel d'alumine,
e2) une étape de séchage dudit gel d'alumine obtenu à l'étape d2) pour obtenir une poudre,
f2) une étape de traitement thermique de la poudre obtenue à l'issue de l'étape e2) à une température comprise entre 500 et 1000°C, en présence ou non d'un flux d'air contenant jusqu'à 60 % en volume d'eau pour obtenir un oxyde poreux aluminique calciné,
g2) une étape de malaxage de l'oxyde poreux aluminique calciné obtenu à l'étape f2) avec une solution comprenant au moins un précurseur du ou des métaux choisi(s) dans le groupe constitué par le cuivre, le chrome, le manganèse, le fer, le cobalt et le nickel pour obtenir une pâte,
h2) une étape de mise en forme de la pâte obtenue,
i2) une étape de séchage de la pâte mise en forme à une température inférieure à 200°C de manière à obtenir un précurseur séché de ladite masse de captation,
j2) éventuellement une étape de traitement thermique dudit précurseur séché à une température comprise entre 200 et 1500°C en présence ou non d'eau,
k2) une étape de sulfuration dudit précurseur obtenu à l'étape i2) ou j2) de manière à obtenir ladite masse de captation.

### Etape a2) Première précipitation

Cette étape consiste en la mise en contact, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent Al₂O₃ lors de ladite première étape de précipitation par rapport à la quantité totale d'alumine formée en équivalent Al₂O₃ à l'issue de l'étape c2) du procédé de préparation, ladite étape opérant à une température comprise entre 20 et 90°C, et pendant une durée comprise entre 2 et 30 minutes.

Le mélange dans le milieu réactionnel aqueux d'au moins un précurseur basique et d'au moins un précurseur acide nécessite soit, qu'au moins un des précurseurs acide ou basique comprenne de l'aluminium. Il est également possible qu'au moins deux des précurseurs basique et acide comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

Conformément à l'invention, les précurseurs acides d'alumine et les précurseurs basiques d'alumine peuvent être utilisés seuls ou en mélange dans l'étape de précipitation.

De préférence, le milieu réactionnel aqueux est de l'eau. De préférence, ladite étape a2) opère sous agitation. De préférence, ladite étape a2) est réalisée en l'absence d'additif organique.

Conformément à l'invention, le débit relatif des précurseurs acide et basique qu'ils contiennent de l'aluminium ou pas, est choisi de manière à obtenir un pH du milieu réactionnel compris entre 8,5 et 10,5, de préférence compris entre 8,5 et 10, et de manière très préférée compris entre 8,7 et 9,9.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,60 et 2,05.

Pour les autres précurseurs basique et acide, qu'ils contiennent de l'aluminium ou pas, les ratios massiques base/acide sont établis par une courbe de neutralisation de la base par l'acide. Une telle courbe est obtenue aisément par l'homme du métier.

La première étape a2) de précipitation est réalisée à une température compris entre 20 et 90°C, de manière préférée entre 20 et 70°C, et de manière plus préférée entre 30 et 50°C. La première étape a2) de précipitation est réalisée pendant une durée comprise entre 2 et 30 minutes, de préférence comprise entre 5 et 20 minutes, et de manière particulièrement préférée comprise entre 5 à 15 minutes.

Selon l'invention, le taux d'avancement de ladite première étape de précipitation a2) est compris entre 5 et 13%, de préférence entre 6 et 12 %, et de préférence entre 7 et 11. Le taux d'avancement pour chacune des étapes de précipitation est défini comme étant la proportion d'alumine formée en équivalent Al₂O₃ lors de ladite première ou deuxième de précipitation par rapport à la quantité totale d'alumine formée en équivalent Al₂O₃ à l'issue des deux étapes de précipitation et plus généralement à l'issue des étapes de préparation du gel d'alumine et notamment à l'issue de l'étape c2) du procédé de préparation selon l'invention.

Les précurseurs acide et basique contenant de l'aluminium sont donc introduits dans des quantités permettant d'obtenir une suspension contenant la quantité désirée d'alumine, en fonction de la concentration finale en alumine à atteindre.

### Étape b2) Chauffage

Conformément à l'invention, ledit procédé de préparation comprend une étape b2) de chauffage de la suspension obtenue à l'étape a2) à une température comprise entre 40 et 90°C pendant une durée comprise entre 7 et 45 minutes pour obtenir un gel d'alumine.

Ladite étape de chauffage opère à une température comprise entre 40 et 90°C, de préférence entre 40 et 80°C, de manière préférée entre 40 et 70°C.

Ladite étape de chauffage est mise en oeuvre pendant une durée comprise entre 7 et 45 minutes, et de préférence entre 7 et 35 minutes.

Ladite étape de chauffage est avantageusement mise en oeuvre selon toutes les méthodes de chauffage connues de l'homme du métier.

### Étape c2) Deuxième précipitation

Selon l'invention, ledit procédé de préparation comprend une deuxième étape de précipitation de la suspension chauffée obtenue à l'issue de l'étape b2) de chauffage, ladite deuxième étape opérant par ajout dans ladite suspension d'une solution aqueuse d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95%, le taux d'avancement étant défini comme étant la proportion d'alumine formée en équivalent Al₂O₃ lors de ladite deuxième étape de précipitation par rapport à la quantité totale d'alumine formée en équivalent Al₂O₃ à l'issue de l'étape c2) du procédé de préparation, ladite étape opérant à une température comprise entre 40 et 90 °C, et pendant une durée comprise entre 2 et 50 minutes.

De même que dans la première étape de précipitation a2), l'ajout dans la suspension chauffée, d'au moins un précurseur basique et d'au moins un précurseur acide nécessite qu'au moins un des précurseurs basique ou acide comprenne de l'aluminium. Il est également possible qu'au moins deux des précurseurs basiques et acides comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

Le ou les précurseur(s) basique(s) et acide(s) sont ajoutés dans l'étape c1) en solution aqueuse. De préférence, le milieu réactionnel aqueux est de l'eau. De préférence, ladite étape c2) opère sous agitation. De préférence, ladite étape c2) est réalisée en l'absence d'additif organique.

De même que dans l'étape a2) de précipitation, le débit relatif des précurseurs acides et basiques, qu'ils contiennent de l'aluminium ou pas, est choisi de manière à obtenir un pH du milieu réactionnel compris entre 8,5 et 10,5, de préférence compris entre 8,5 et 10, de manière encore plus préférée entre 8,7 et 9,9.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,60 et 2,05.

Pour les autres précurseurs basique et acide, qu'ils contiennent de l'aluminium ou pas, les ratios massiques base/acide sont établis par une courbe de neutralisation de la base par l'acide. Une telle courbe est obtenue aisément par l'homme du métier.

La deuxième étape de précipitation est réalisée à une température comprise entre 40 et 90°C, de préférence comprise entre 40 et 80°C, de manière préférée comprise entre 45 et 70°C, et de manière très préférée comprise entre 50 et 70°C. La deuxième étape de précipitation est réalisée pendant une durée comprise entre 2 et 50 minutes, de préférence comprise entre 5 et 45 minutes, et de manière préférée comprise entre 7 et 40 minutes.

Les précurseurs d'aluminium sont également mélangés dans des quantités permettant d'obtenir une suspension contenant la quantité désirée d'alumine, en fonction de la concentration finale en alumine à atteindre. En particulier, ladite deuxième étape de précipitation permet l'obtention de 87 à 95% poids d'alumine par rapport à la quantité totale d'alumine formée à l'issue des deux étapes de précipitation. Le taux d'avancement pour chacune des étapes de précipitation est défini comme étant la proportion d'alumine formée en équivalent Al₂O₃ lors de ladite première ou deuxième de précipitation par rapport à la quantité totale d'alumine formée en équivalent Al₂O₃ à l'issue des deux étapes de précipitation et plus généralement à l'issue des étapes de préparation du gel d'alumine et notamment à l'issue de l'étape c2) du procédé de préparation selon l'invention.

De même que dans l'étape a2) de précipitation, c'est le débit du ou des précurseurs acide et basique contenant de l'aluminium qui est réglé de manière à obtenir un taux d'avancement de la deuxième étape compris entre 87 et 95%, de préférence entre 88 et 94 %, de manière très préférée entre 89 et 93 %.

Ainsi, en fonction de la concentration en alumine visée à l'issue des deux étapes de précipitation a2) et c2), généralement comprise entre 20 et 100 g/L, de préférence entre 20 et 80 g/L, de manière préférée entre 20 et 50 g/L, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajoutée dans le milieu réactionnel et du taux d'avancement requis pour chacune des étapes de précipitation.

De même que dans l'étape a2) de précipitation, les débits du ou des précurseurs acide et/ou basique contenant de l'aluminium dépendent de la dimension du réacteur utilisé et ainsi de la quantité d'eau ajoutée dans le milieu réactionnel.

A titre d'exemple, si on travaille dans un réacteur de 3 L et que l'on vise 1 L de suspension d'alumine de concentration finale en Al₂O₃ de 50 g/L, avec un taux d'avancement ciblé de 10% pour la première étape de précipitation, 10% de l'alumine totale doit être apportée lors de l'étape a2) de précipitation. Les précurseurs d'alumines sont l'aluminate de sodium à une concentration de 155 g/L en Al₂O₃ et le sulfate d'aluminium à une concentration de 102 g/L en Al₂O₃. Le pH de précipitation de la première étape est fixé à 9,5 et la deuxième à 9. La quantité d'eau ajoutée dans le réacteur est de 620 mL.

Pour la première étape a2) de précipitation opérant à 30°C et pendant 8 minutes, le débit de sulfate d'aluminium doit être de 2,1 mL/min et le débit d'aluminate de sodium est de 2,6 mL/min. Le ratio massique d'aluminate de sodium sur sulfate d'aluminium est donc de 1,91. Pour la deuxième étape de précipitation c2), opérant à 70°C, pendant 30 minutes, le débit de sulfate d'aluminium doit être de 5,2 mL/min et le débit d'aluminate de sodium est de 6,3 mL/min. Le ratio massique d'aluminate de sodium sur sulfate d'aluminium est donc de 1,84.

### Étape d2) Filtration

Le procédé de préparation d'alumine selon l'invention comprend également une étape de filtration de la suspension obtenue à l'issue de l'étape c2) de deuxième précipitation de manière à obtenir un gel d'alumine. Ladite étape de filtration est réalisée selon les méthodes connues de l'homme du métier.

Ladite étape de filtration est avantageusement suivie d'au moins une étape de lavage, de préférence à l'eau et de préférence d'une à trois étapes de lavage, avec une quantité d'eau égale à la quantité de précipité filtré.

La filtrabilité de la suspension obtenue à l'issue des deux étapes de précipitation est améliorée par la faible dispersibilité du gel d'alumine obtenu, ce qui permet d'améliorer la productivité du procédé selon l'invention ainsi que de permettre une extrapolation du procédé au niveau industriel. Dans toute la suite du texte, la dispersibilité est définie comme le poids de solide ou gel d'alumine peptisée que l'on ne peut pas disperser par centrifugation dans un tube en polypropylene à 3600G pendant 3 minutes.

A la fin de l'étape d2) on obtient un gel d'alumine, aussi appelé boehmite, présentant un taux de dispersibilité inférieur ou égal à 15%, de préférence compris entre 5 et 15%, et de manière préférée comprise entre 6 et 14%, et de manière très préférée compris entre 7 et 13%, et de manière encore plus préférée compris entre 7 et 10% et une taille de cristallites de boehmite comprise entre 1 et 35 nm et de préférence comprise entre 2 à 35 nm.

Le taux de dispersibilité faible du gel ainsi préparé permet de faciliter l'étape de mise en forme dudit gel selon toutes les méthodes connues de l'homme du métier et en particulier par malaxage extrusion, par granulation, par pastillage et par la technique dite de goutte d'huile (égouttage).

En particulier, le gel d'alumine sous forme de poudre selon l'invention est composé de cristallites dont la taille, obtenue par la formule de Scherrer en diffraction des rayons X selon les directions cristallographiques [020] et [120] sont respectivement comprises entre 1 et 20 nm pour la direction [020] et entre 1 et 35 nm pour la direction [120]. La diffraction des rayons X sur les gels d'alumine a été effectuée en utilisant la méthode classique des poudres au moyen d'un diffractomètre. La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 Scherrer after sixty years: A survey and some new results in the détermination of crystallite size, J. I. Langford and A. J. C. Wilson.

### Etape e2) Séchage du gel d'alumine

Conformément à l'invention, le gel d'alumine obtenu à l'issue de l'étape c2) de deuxième précipitation, suivie d'une étape de filtration d2), est séché dans une étape e2) de séchage pour obtenir une poudre. Ladite étape de séchage est généralement mise en oeuvre par séchage à une température comprise entre 20 et 200°C et pendant une durée comprise entre 8 et 15 heures, ou par atomisation telle que décrite à l'étape e1) ou par toute autre technique de séchage connue de l'homme du métier.

Les étapes f2) de traitement thermique, g2) de co-malaxage, h2) de mise en forme, i2) de séchage, j2) optionnelle de traitement thermique et k2) de sulfuration du deuxième procédé de préparation de la masse de captation sont identiques aux étapes f1), g1), h1), i1), j1) et k1) décrites pour le premier procédé de préparation. On obtient ainsi la masse de captation selon l'invention.

Dans un mode de réalisation, afin d'augmenter la teneur globale en phase active sur la masse de captation co-malaxée quelle que soit le procédé de préparation du gel d'alumine décrit ci-dessus, une partie du ou des précurseur(s) métallique(s) peut être introduite par imprégnation de ladite masse issue de l'étape de séchage, de traitement thermique ou de sulfuration, selon toute méthode connue de l'Homme du métier, la plus fréquente étant celle de l'imprégnation à sec. Dans ce cas, ladite imprégnation est avantageusement suivie d'un séchage, d'un traitement thermique éventuel, et d'une sulfuration. Le séchage peut être réalisé à l'air, généralement à une température comprise entre 70°C et 250°C, de préférence entre 80°C et 200°C. Le traitement thermique est réalisé à une température comprise entre 300°C et 800°C, préférentiellement entre 350°C et 600°C. De manière préférée, le traitement thermique est réalisé sous air contenant une humidité relative à 25°C comprise entre 10% et 80%, de préférence entre 15% et 50%.

Dans un autre mode de réalisation, la totalité du ou des précurseur(s) métallique(s) est introduite au cours de la préparation par co-malaxage de la matrice oxyde majoritairement aluminique calcinée et aucune étape supplémentaire d'imprégnation ne sera donc nécessaire. De préférence, le ou les précurseur(s) métallique(s) de la phase active sont entièrement co-malaxés au sein de la matrice oxyde majoritairement aluminique calcinée.

### Procédé de captation

La masse de captation selon l'invention, pouvant être préparée telle que décrit ci-dessus, peut avantageusement être utilisée comme masse de captation de métaux lourds. Le procédé de captation de métaux lourds dans un effluent gazeux, éventuellement humide, ou liquide à l'aide de la masse de captation selon l'invention est également un objet de la présente invention.

L'effluent gazeux, éventuellement humide, ou liquide à traiter peut contenir des métaux lourds, par exemple du mercure, de l'arsenic ou du plomb, sous différentes formes. Par exemple, on peut trouver du mercure sous une forme dite Hg°, correspondant à du mercure élémentaire ou atomique, sous forme moléculaire, et/ou sous forme ionique, par exemple Hg²⁺ et ses complexes. La concentration en métaux lourds dans l'effluent gazeux ou liquide à traiter peut être variable. L'effluent gazeux à traiter peut contenir préférentiellement entre 10 ng et 1 g de mercure par Nm³ de gaz. L'effluent liquide à traiter peut contenir préférentiellement entre 10 ng et 1 g de mercure par m³ de liquide. En outre, cet effluent gazeux ou liquide à traiter peut contenir de l'arsenic et/ou du plomb sous différentes formes. La teneur en plomb de l'effluent peut être comprise entre 1 ppt poids et 100 ppm poids, et la teneur en arsenic peut être comprise entre 100 ppt poids et 100 ppb poids. Enfin, l'effluent à traiter peut contenir d'autres éléments tels que le soufre et l'azote sous différentes formes. En particulier, le soufre peut être présent sous forme de mercaptans, de soufre organique ou encore de thiophène. La teneur en soufre de l'effluent peut être comprise entre 1 ppt poids et 1000 ppm poids, et la teneur en azote peut être comprise entre 1 ppt poids et 100 ppm poids. Ni l'azote, ni le soufre présent n'entraînent de pertes de performance des masses de captation de l'invention.

La masse de captation selon la présente invention permet de traiter aussi bien des effluents liquides que gazeux. En outre, l'effluent gazeux peut être un gaz humide ou contenant des vapeurs de condensables, sans que cela ne diminue notablement la durée de vie de la masse de captation. Le taux d'hygrométrie de l'effluent gazeux, défini comme le ratio de la pression partielle d'eau sur la pression de vapeur saturante de l'eau à une température donnée, peut être compris entre 0% et 99%, préférentiellement entre 1% et 95%, et plus préférentiellement entre 2% et 90%. De manière encore plus préférée, le degré d'hygrométrie est compris entre 3% et 80%.

L'utilisation de la masse de captation selon l'invention est particulièrement adaptée au traitement des effluents liquides ou gazeux d'origine pétrolière et leurs dérivés. Il est courant que de tels effluents contiennent des métaux lourds. L'effluent gazeux ou liquide à traiter dans le procédé selon l'invention peut avantageusement être choisi dans le groupe constitué par les fumées de combustion, le gaz de synthèse, le gaz naturel, les condensats du gaz naturel, le pétrole, les coupes pétrolières liquides ou gazeuses, les intermédiaires pétrochimiques et leurs mélanges. De manière préférée, l'effluent gazeux ou liquide à traiter dans le procédé selon l'invention est avantageusement choisi dans le groupe constitué par les fumées de combustion, le gaz de synthèse, le gaz naturel, les condensats de gaz naturel, les bruts pétroliers, les coupes hydrocarbures liquides de raffinerie ou d'usine pétrochimique.

Les fumées de combustion sont produites notamment par la combustion d'hydrocarbures, de biogaz et de charbon dans une chaudière ou par une turbine à gaz de combustion, par exemple dans le but de produire de l'électricité. Ces fumées ont une température généralement comprise entre 20°C et 60°C, une pression généralement comprise entre 0,1 MPa (1 bar) et 0,5 MPa (5 bars) et peuvent comporter, en volume, entre 50% et 80% d'azote, entre 5% et 40% de dioxyde de carbone, entre 1% et 20% d'oxygène, et des impuretés comme des SOₓ et des NOₓ si ces impuretés n'ont pas été éliminées en aval par un procédé de désacidification.

Le gaz de synthèse est un gaz contenant du monoxyde de carbone CO, de l'hydrogène H₂ dans un ratio molaire H₂/CO généralement égal à environ 2, de la vapeur d'eau généralement à saturation et du dioxyde de carbone CO₂ à une teneur généralement d'environ 10% en volume. La pression des gaz de synthèse les plus fréquemment rencontrés dans l'industrie est généralement comprise entre 2 MPa (20 bars) et 3 MPa (30 bars), mais elle peut atteindre 7 MPa (70 bars). Le gaz de synthèse peut contenir, en outre, des impuretés soufrées (H₂S, COS...), azotées (NH₃, HCN...) et halogénées.

Le gaz naturel est constitué majoritairement d'hydrocarbures gazeux, mais peut contenir plusieurs des composés acides suivants : le dioxyde de carbone CO₂, le sulfure d'hydrogène H₂S, des mercaptans, l'oxysulfure de carbone COS et le sulfure de carbone CS₂. La teneur du gaz naturel en ces composés acides est très variable et peut aller jusqu'à 40% volumiques pour le CO₂ et l'H₂S. La température du gaz naturel la plus fréquemment rencontrée dans l'industrie peut être comprise entre 20°C et 100°C et sa pression peut être comprise entre 1 MPa (10 bars) et 20 MPa (200 bars).

Les condensats de gaz naturel sont constitués d'hydrocarbures liquides associés à la production de gaz naturel. Ces mélanges liquides complexes sont très semblables à des bruts pétroliers.

Parmi les hydrocarbures liquides de raffinerie, on se focalisera sur les GPL (coupe C3-C4), les naphtas (coupe C5-C8), les kérosènes et les diesels.

Parmi les hydrocarbures liquides d'usine pétrochimique, on se focalisera sur les GPL (coupe C3-C4) et les essences de vapocraqueur.

Dans le procédé de captation de métaux lourds dans un effluent gazeux ou liquide selon l'invention, ledit effluent est mis en contact avec la masse de captation selon l'invention. Cette mise en contact peut être de préférence réalisée en injectant l'effluent à traiter dans un réacteur contenant la masse de captation sous la forme d'un lit fixe.

Cette mise en contact de l'effluent à traiter avec la masse de captation dans le procédé selon l'invention peut être réalisée à une température comprise entre -50°C et 115°C, préférentiellement entre 0°C et 110°C, et plus préférentiellement entre 20°C et 100°C. En outre, elle peut être réalisée à une pression absolue comprise entre 0,01 MPa (0,1 bar) et 20 MPa (200 bars), préférentiellement entre 0,1 MPa (1 bar) et 15 MPa (150 bars), et plus préférentiellement entre 0,1 MPa (1 bar) et 12 MPa (120 bars).

De plus, cette étape de mise en contact de l'effluent à traiter avec la masse de captation peut être réalisée avec une V.V.H. comprise entre 0,1 h⁻¹ et 50000 h⁻¹. On entend par « V.V.H. » la Vitesse Volumique Horaire de l'effluent gazeux ou liquide dans la masse de captation, c'est-à-dire le volume de l'effluent gazeux ou liquide par volume de colonne et par heure. Pour un effluent à traiter gazeux, la V.V.H. peut être comprise préférentiellement entre 50 h⁻¹ et 500 h⁻¹. Pour un effluent à traiter liquide, la V.V.H. peut être comprise entre 0,1 h⁻¹ et 50 h⁻¹.

Dans un mode de réalisation de l'invention, la masse de captation peut être mise en oeuvre sous sa forme oxyde (précurseur séché ou traité thermiquement obtenu aux étapes i) ou j) d'un des deux procédés), c'est à dire n'ayant pas subi d'étape de sulfuration. Ce précurseur de la masse de captation est alors utilisé pour traiter des effluents contenant des espèces soufrées, qui permettent d'effectuer une sulfuration de la masse de captation in-situ. Ce mode de réalisation a pour avantage de purifier l'effluent à la fois des espèces soufrées et du mercure.

Le contact avec la masse de captation permet avantageusement de capter les métaux lourds contenus dans l'effluent à traiter, et d'obtenir un effluent ayant une teneur en métaux lourds réduite par rapport à la teneur de l'effluent initial, voire d'éliminer totalement les métaux lourds de l'effluent.

Avantageusement, la diminution de teneur totale en poids en métaux lourds entre l'effluent gazeux ou liquide avant traitement et l'effluent obtenu après traitement avec le masse de captation selon l'invention peut représenter au moins 90%, préférentiellement au moins 95%, et plus préférentiellement au moins 99%.

### EXEMPLES

### Exemple A : Synthèse des précurseurs oxydes des masses S1 et S2 selon l'invention en visant respectivement 12 et 26%pds Cu sur la masse de captation (selon le premier procédé de préparation)

### Synthèse d'un gel de boehmite

On prépare 51 de solution telle qu'on ait 27 g/L en alumine finale et un taux de contribution de la première étape à 2,1% de l'alumine totale dans un réacteur de laboratoire d'une capacité d'environ 7000 mL. La synthèse se déroule à 70°C et sous agitation. Un pied d'eau de 1679 mL est présent dans le réacteur.
- Étape a1) : On introduit 70 mL de sulfate d'aluminium à 102 g/L en Al₂O₃ dans le réacteur contenant le pied d'eau en une fois. Le pH compris entre 2,5 et 3,5 est suivi pendant 10 minutes.
- Étape b1) : Après l'étape d'hydrolyse, on ajoute progressivement environ 70 mL d'aluminate de sodium à 155 g/L en Al₂O₃. L'objectif est d'atteindre un pH compris entre 7 et 10 en 5 à 15 minutes.
- Étape de co-précipitation c1) : Puis sont ajoutés à la solution issue de l'étape b1) en 30 minutes :
   1020 mL de sulfate d'aluminium à 102 g/L en Al₂O₃ soit un débit de 34 mL/min,
   1020 mL d'aluminate de sodium à 155 g/L en Al₂O₃ soit un débit de 34 mL/min,
   1150 mL d'eau distillée soit un débit de 38,3 mL/min.
- Etape d1) : À la fin de la synthèse, la suspension est filtrée.
- Etape e1) : Le gâteau obtenu est lavé plusieurs fois et séché à l'étuve pendant une nuit à 120°C.

### Traitement thermique de la poudre

- Etape f1) : On calcine la poudre en four à moufle avec une montée de 5°C/min jusqu'à 700°C puis on maintient la température 2 h.

### Co-malaxage et mise en forme de la poudre calcinée avec la phase active :

### Préparation du précurseur de la masse S1 :

- Etapes g1) à j1) : On malaxe 17,37 g (masse sèche) de poudre d'alumine avec une solution composée de 9,35 g de Cu(NO₃)₂, 3H₂O + 18,32 g d'eau pendant environ 1h. On extrude la pâte obtenue à 5cm/min avec une filière 2,1mm trilobée. On sèche les extrudés une nuit à 80°C, puis on les calcine 45 min à 450°C sous 1 NL/h/g d'air sec en flux traversé (montée à 5°C/min). On obtient un précurseur contenant 11,98 % poids de Cu.

### Préparation du précurseur de la masse S2 :

- Etapes g1) à j1) : Le même protocole que pour le précurseur de la masse S1 est appliquée mais avec 16,64g (masse sèche) de poudre d'alumine et avec une solution composée de 21,76g de Cu(NO₃)₂, 3H₂O + 14,88g d'eau. On obtient un précurseur contenant 27,96 % poids de Cu.

### Exemple B : Synthèse des précurseurs oxyde des masses S3 et S4 selon l'invention en visant respectivement 12 et 26% pds Cu sur la masse de captation (selon le deuxième procédé de préparation)

### Synthèse d'un gel de boehmite

- Etape a2) : La synthèse de boehmite selon l'invention est réalisée dans un réacteur en 5L en 3 étapes à partir de sulfate d'aluminium Al₂(SO₄)₃ à 102 g/L en Al₂O₃ et d'aluminate de sodium NaAlOO à 155 g/L en Al₂O₃ avec pour objectif d'atteindre une concentration finale en alumine de 45 g/L :
   Une première co-précipitation du sulfate d'aluminium Al₂(SO₄)₃ et de l'aluminate de sodium NaAlOO à 30°C et pH=9,1 en 8 min : le taux d'avancement est de 8%.
- Etape b2) : Une montée en température de 30 à 70°C en 20 à 30 minutes.
- Etape c2) : Une deuxième co-précipitation du sulfate d'aluminium Al₂(SO₄)₃ et de l'aluminate de sodium NaAlOO à 70°C et pH=9,1 en 30 min, avec un taux d'avancement de 92%.
- Etape d2) : A la fin de la synthèse, la suspension est filtrée.
- Etape e2) : Le gâteau obtenu est lavé plusieurs fois et séché à l'étuve pendant une nuit à 120°C.

### Traitement thermique de la poudre

- Etape f2) : On calcine la poudre en four à moufle avec une montée de 5°C/min jusqu'à 700°C puis on maintient la température pendant 2h.

### Co-malaxage et mise en forme de la poudre calcinée avec la phase active

### Préparation du précurseur de la masse S3 :

- Etapes g2) à j2) : On applique le même protocole que celui du précurseur de la masse S1 mais avec 17,83 g (masse sèche) de poudre d'alumine et avec une solution composée de 9,51 g de Cu(NO₃)₂, 3H₂O + 15,08 g d'eau. On obtient un précurseur contenant 11,81 % poids de Cu.

### Préparation du précurseur de la masse S4 :

- Etapes g2) à j2) : On applique le même protocole que celui du précurseur de la masse S1 mais avec 16,25 g (masse sèche) de poudre d'alumine avec une solution composée de 21,52 g de Cu(NO₃)₂, 3H₂O + 16,32 g d'eau. On obtient un précurseur contenant 25,22 % poids de Cu.

### Exemple C : Synthèse du précurseur oxyde d'une masse S5 non-conforme à l'invention, par co-malaxage de boehmite en visant 12%pds Cu sur la masse de captation

### Synthèse d'un gel de boehmite

On procède de la même manière que pour la synthèse d'un gel de boehmite de l'exemple A.

### Mise en forme

On applique le même protocole que celui du comalaxage du précurseur de la masse S1 mais avec 17,51 g (masse sèche) de poudre de boehmite et non d'alumine, et avec une solution composée de 9,28 g de Cu(NO₃)₂, 3H₂O + 17,41 g d'eau.

### Calcination

On calcine les extrudés obtenus en four à moufle avec une montée de 5°C/min jusqu'à 700°C, puis on maintient la température pendant 2 h. On obtient un précurseur contenant 11,63 % poids de Cu.

### Exemple D : Synthèse du précurseur oxyde d'une masse S6 non-conforme à l'invention, par co-malaxage d'une alumine issue d'un gel différent de ceux décrits dans l'invention en visant 12% pds Cu sur la masse de captation

### Synthèse d'un gel de boehmite

La synthèse de boehmite non-conforme à l'invention est réalisée dans un réacteur en 5L en 1 seule étape par mélange de sulfate d'aluminium Al₂(SO₄)₃ à 102 g/L en Al₂O₃ et d'aluminate de sodium NaAlOO à 155 g/L en Al₂O₃ à une température de 60°C, un pH de 9, durant 60 minutes. Le gel ainsi précipité est filtré. Le gâteau obtenu est lavé plusieurs fois et séché à l'étuve pendant une nuit à 120°C.

### Traitement thermique de la poudre

On calcine la poudre en four à moufle avec une montée de 5°C/min jusqu'à 700°C puis on maintient la température 2 h.

### Mise en forme de la poudre calcinée

On applique le même protocole que celui du comalaxage du précurseur de la masse S1 mais avec 17,45 g (masse sèche) de poudre d'alumine et avec une solution composée de 9,44 g de Cu(NO₃)₂, 3H₂O + 19,55 g d'eau. On obtient un précurseur contenant 26,48 % poids de Cu.

### Exemple E : Synthèse du précurseur oxyde d'une masse S7 non-conforme à l'invention, par imprégnation selon le protocole du brevet FR2980722 en visant 12% pds Cu sur la masse de captation

### Synthèse d'un gel de boehmite

On procède de la même manière que pour la synthèse du gel de boehmite de l'exemple D.

### Mise en forme de la poudre

Le gel ainsi obtenu subit un malaxage sur un malaxeur bras en Z pour fournir une pâte. Une extrusion a été réalisée par passage de la pâte à travers une filière munie d'un orifice de 1,6 mm de diamètre en forme de trilobé. Les extrudés ainsi obtenus ont été séchés à 150°C.

### Calcination de la poudre

On calcine les extrudés obtenus en four à moufle avec une montée de 5°C/min jusqu'à 500°C puis on maintient la température 2 h.

### Imprégnation à sec

On dépose sur 20,02 g de ce support du cuivre par imprégnations à sec (imprégnation où le volume de la solution d'imprégnation correspond exactement au volume de reprise en eau du support, c'est à dire au volume poreux accessible du solide) :
a) préparation de la solution d'imprégnation par dissolution de 10,68 g de Cu(NO₃)₂, 3H₂O + 12,85 g eau ;
b) imprégnation par aspersion lente du support ;
c) maturation en vase clos pendant 3 h à température ambiante ;
d) séchage à 90°C pendant 3 h ;
e) calcination à 450°C sous atmosphère humide pendant 45 minutes dans un four tubulaire.

On obtient un précurseur contenant 10,72 % poids de Cu.

### Exemple F : Synthèse du précurseur oxyde d'une masse S8 non-conforme à l'invention par co-granulation en visant 26% pds Cu sur la masse de captation

### Co-granulation de poudres

Pour obtenir environ 20 g de précurseur de masse de captation, on mélange intimement 10,81 g de carbonate basique de cuivre, 3,54 g d'oxyde de zinc, 2,43 g de trihydrate d'alumine avec deux liants que sont de l'aluminate de calcium (0,81 g) et de l'attapulgite (0,89 g) en présence d'un peu d'eau de manière à former des billes dans un drageoir.

### Séchage des billes

Les granulés ainsi obtenus sont séchés 2 h à température ambiante puis à 105°C pendant 16 h sous air. On obtient un précurseur contenant 11,20 % poids de Cu.

### Exemple G : Synthèse des précurseurs oxydes des masses S9 et S10 non-conformes à l'invention par imprégnation selon un des protocoles du brevet FR2764214 en visant respectivement 12 et 26% pds Cu sur la masse de captation

### Synthèse et mise en forme d'une alumine de type « flash »

La première étape consiste en une déshydratation rapide de 20,61 g de gibbsite à haute température (800°C) et à faible temps de contact (0,8 seconde), permettant l'obtention d'une poudre d'alumine de transition principalement χ (chi).

Un lavage permettant la diminution de la teneur en Na₂O est effectué à l'aide d'eau (3 kg/kg d'Al₂O₃), suivi d'un second traitement de déshydratation rapide similaire au précédent, permettant également d'obtenir une poudre d'alumine.

Cette poudre est mise en forme par granulation dans un drageoir.

Un traitement hydrothermal est effectué à forte pression partielle d'eau (100%) pendant 8 h. Les billes ainsi obtenues sont séchées à 150°C puis calcinées à 500°C dans un four à moufle.

### Imprégnation à sec

On procède de la même manière que pour l'imprégnation de l'exemple E. Pour préparer S9 et S10, on imprègne respectivement 20,05 g et 19,98 g d'alumine mise en forme avec respectivement une solution de 10,68 g de Cu(NO₃)₂, 3H₂O + 12,85g eau et une 10,68 g de Cu(NO₃)₂, 3H₂O + 12,85 g eau. On obtient un précurseur contenant 27,62 % poids de Cu.

Tous les solides préparés dans les exemples de A à G sont composés d'une matrice aluminique et d'oxyde de cuivre. Pour obtenir des masses de captation du mercure, il faut les sulfurer. L'étape de sulfuration (étape k1 ou k2 pour les solides préparés selon l'invention) est réalisée ex-situ, à pression atmosphérique et sous un flux contenant 5% molaire d'H₂S dilué dans de l'azote à une température de 250°C, sauf pour les masses de captation S7 et S8 qui sont sulfurées respectivement à 150 et 50°C.

Les caractéristiques des populations poreuses des masses S1 à S10 (sulfurées) sont reportées dans le Tableau 1. Ces distributions poreuses sont obtenues par la méthode de porosimétrie mercure.

**Tableau 1 - Volume poreux et distribution de ce volume poreux en fonction du diamètre des pores des masses de captation S1 à S10**

| | Volume poreux total (mL.g-1) | % Volume | | |
|---|---|---|---|---|
| | | diamètre des pores 3,6 à 20 nm | diamètre des pores >20-100 nm | diamètre des pores >100 nm |
| Exemples selon l'invention | | | | |
| S1 | 0,69 | 54,6 | 28,5 | 16,9 |
| S2 | 0,65 | 52,5 | 32,3 | 15,2 |
| S3 | 0,76 | 42,0 | 21,8 | 36,2 |
| S4 | 0,77 | 38,1 | 22,6 | 39,4 |

| Exemples comparatifs | | | | |
|---|---|---|---|---|
| S5 | 0,40 | 99,2 | 0,5 | 0,3 |
| S6 | 0,58 | 92,3 | 4,3 | 3,4 |
| S7 | 0,53 | 95,3 | 3,0 | 1,8 |
| S8 | 0,21 | 5,8 | 81,9 | 12,3 |
| S9 | 0,74 | 14,0 | 54,2 | 31,8 |
| S10 | 0,57 | 16,3 | 55,4 | 28,3 |

On observe que seules les masses S1 à S4 selon l'invention, c'est-à-dire celles préparées par co-malaxage à partir soit de gel d'alumine préparé selon le premier procédé, décrit ci-dessus soit à partir de gel d'alumine préparé selon le deuxième procédé décrit ci-dessus, présentent une distribution poreuse trimodale et dans laquelle le volume représenté par les pores ayant un diamètre supérieur à 3,6 nm et inférieur ou égal à 20 nm représente entre 30 et 60% du volume poreux total, le volume représenté par les pores ayant un diamètre supérieur à 20 nm et inférieur ou égal à 100 nm représente entre 20 et 45% du volume poreux total, le volume représenté par les pores ayant un diamètre supérieur à 100 nm représente entre 10 et 40% du volume poreux total. La comparaison des masses S1 et S2 ou encore des masses S3 et S4 montre que malgré l'augmentation de la quantité de phase active le volume poreux ne change pas.

La masse S5 préparée par co-malaxage de boehmite et de phase active ne possède que des bas mésopores.

La masse S6 préparée par co-malaxage d'un gel autre que ceux décrits dans la présente invention et de phase active ainsi que la masse S7 préparée par imprégnation d'un support aluminique de type gel ne présentent presque que de bas mésopores. Les pourcentages de pores hybrides méso/macropores et des macropores sont très faibles.

La masse S8 préparée par co-granulation présente une distribution poreuse dans laquelle le pourcentage de bas mésopores est faible et le pourcentage de pores hybrides méso/macropores est plus élevé que requis. De plus, le volume poreux total de la masse S8 est faible.

Les masses S9 et S10 préparées par imprégnation d'un support aluminique de type flash présentent une distribution poreuse dans laquelle le pourcentage de bas mésopores est plus bas et le pourcentage de pores hybrides méso/macropores est plus élevé. La comparaison des masses S9 et S10 montre que l'augmentation de la quantité de phase active entraîne une baisse significative du volume poreux.

### Exemple H : Comparaison des capacités et des cinétiques de captation du mercure en phase gaz des masses de captation précédemment préparées

Les performances d'adsorption du mercure des masses de captation préparées comme décrit ci-dessus sont testées dans un réacteur R1. Une bille de mercure liquide d'environ 30 g est tout d'abord versée dans une coupelle en verre qui est ensuite déposée dans le fond du réacteur R1 de volume 1 L. Une masse mₘ de la masse de captation est déposée dans une nacelle en treillis métallique qui est ensuite introduite à l'intérieur du réacteur R1. Le réacteur R1 est introduit dans une enceinte chauffante régulée à T = 70°C pendant 1 semaine. La nacelle métallique contenant la masse de captation est pesée à intervalles de temps réguliers jusqu'à sa saturation. La masse de la masse de captation saturée est notée mₘ'. La différence de masse de la masse de captation entre avant et après mise en contact avec le mercure dans le réacteur R1 donne accès à la quantité de mercure captée par la masse de captation. Cette quantité ramenée à la masse de la masse de captation conduit à la capacité de captation de la masse de captation en mercure : %Hg_{réelle} = (mₘ'-mₘ) / mₘ x 100. La captation du mercure se fait sur les masses de captation préparées dans les exemples A à G par chimisorption selon la réaction suivante : 2CuS + Hg → Cu₂S + HgS. Il est donc possible de déterminer la capacité massique d'adsorption théorique de la masse de captation préparée à partir du pourcentage poids en cuivre élémentaire (% Cu) contenu dans la masse de captation mesurée par fluorescence X : %Hg_{théo} = (% Cu x M_{Hg})/ (2 x M_{Cu}). Il s'agit d'une capacité massique d'adsorption exprimée par rapport à la masse de captation avant mercurisation.

Le rapport des valeurs réelles et théoriques de mercure captée par la masse de captation ou taux de mercurisation (TM = (% Hgₑₓₚ/%Hg_{théo}) donne une idée de l'efficacité de la masse de captation et notamment du degré d'accessibilité de sa phase active. Si TM est égal à 1, ceci signifie que la masse de captation capte tout le mercure qu'elle peut capter par rapport à la quantité de phase active qu'elle contient, c'est-à-dire que toute la phase active est accessible au mercure. A l'inverse, si TM est inférieur à 1, ceci signifie que la masse de captation capte moins de mercure que ce qui était prévisible à partir de sa quantité de phase active. Ceci peut être la conséquence d'une sulfuration incomplète du précurseur de CuS contenu dans la masse de captation et/ou d'une accessibilité uniquement partielle de la phase active de la masse de captation. Dans les deux cas, cela suggère de probables problèmes de diffusion des molécules dans le réseau poreux de la masse de captation.

Le suivi dans le temps de la prise de masse de la masse de captation renseigne sur la vitesse à laquelle le solide capte le mercure et donc indirectement à la rapidité de la diffusion du mercure à travers cette masse de captation. Or, cette caractéristique est particulièrement importante, car même si une masse est très capacitive, si le mercure a du mal à diffuser dedans, le mercure risque dans une mise en oeuvre en lit fixe de percer de manière prématurée et donc d'entraîner un besoin de changement de masse de captation avant sa saturation.

Dans le Tableau 2, on reporte les pourcentages poids en Cu, les capacités en mercure théorique et réelle et le TM des masses S1 à S10.

**Tableau 2 - Teneurs en Cu, en mercure théorique et réelle et TM des masses S1 à S10**

| | %Cu | %Hg_{théo} | %Hg_{réelle} | TM |
|---|---|---|---|---|
| Exemples selon l'invention | | | | |
| S1 | 11,98 | 18,37 | 18,11 | 1,11 |
| S2 | 27,96 | 41,25 | 37,46 | 1,06 |
| S3 | 11,81 | 18,11 | 17,85 | 1,08 |
| S4 | 25,22 | 37,46 | 39,21 | 1,02 |

| Exemples comparatifs | | | | |
|---|---|---|---|---|
| S5 | 11,63 | 17,85 | 16,49 | 0,25 |
| S6 | 26,48 | 39,21 | 17,20 | 0,95 |
| S7 | 10,72 | 16,49 | 15,19 | 0,92 |
| S8 | 11,20 | 17,20 | 40,79 | 0,74 |
| S9 | 9,86 | 15,19 | 16,10 | 0,99 |
| S10 | 27,62 | 40,79 | 38,00 | 0,89 |

La masse de captation est d'autant plus performante que la capacité de captation en mercure (% Hg_{réelle}) et la valeur TM sont élevées. On observe que les masses de captation S1 à S4 selon l'invention ont les TM les plus élevées et donc des capacités d'adsorption plus élevées que les autres masses à teneur en phase active proche.

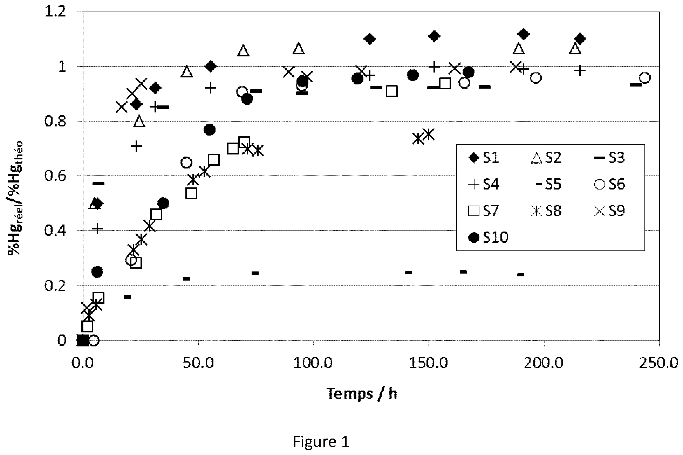

Sur la Figure 1, on représente les courbes de captation du mercure en fonction du temps de masses de captation S1 à S10.

Selon la figure 1, les masses S1 à S4 conformes à l'invention et la masse S9 présentent des cinétiques d'adsorption rapides qui suggèrent une bonne diffusion du mercure dans leur réseau de pores.

Le très faible TM de la masse S5 non-conforme à l'invention est due au fait que la masse a été préparée à partir de boehmite et non d'alumine ce qui ne permet pas d'obtenir une masse de captation efficace vis-à-vis du mercure.

Le TM moins élevé et la plus lente cinétique d'adsorption des masses S6 et S7 non-conformes à l'invention, sont attribués au fait que les masses S6 et S7 ne possèdent presque pas ni de pores hybrides méso/macroporeux, ni de pores macroporeux, nécessaires à la bonne diffusion du mercure. Le mercure s'y adsorbe donc plus lentement et n'accède pas à toute la phase active.

Le TM moins élevé et la plus lente cinétique d'adsorption de la masse S8 est attribué à son très faible volume poreux qui entraîne une diffusion plus difficile du mercure.

Enfin, si on compare les masses S9 et S10, on s'aperçoit qu'augmenter la quantité de phase active a entraîné une baisse de TM et de cinétique d'adsorption. Ceci est attribué à la baisse de volume poreux. Cette évolution lors de l'augmentation de la quantité de phase active n'est pas observée entre les masses S1 et S2 ou entre les masses S3 et S4, conformes à l'invention. Pour les masses conformes à l'invention, il est donc possible d'augmenter significativement la quantité de phase active sans pénaliser ni la diffusion du mercure dans le réseau poreux, ni l'accessibilité de la phase active au mercure.

## Revendications

1. Masse de captation pour la captation des métaux lourds dans un effluent liquide ou gazeux comprenant une matrice oxyde majoritairement aluminique calcinée ayant une teneur en alumine supérieure ou égale à 90 % poids par rapport à ladite matrice et une phase active comprenant au moins un sulfure métallique dont le métal est choisi dans le groupe constitué par le cuivre, le chrome, le manganèse, le fer, le cobalt et le nickel, ladite phase active étant entièrement co-malaxée au sein de ladite matrice oxyde majoritairement aluminique calcinée, le pourcentage poids du ou des métaux de la phase active, exprimé par rapport aux poids total de la masse de captation étant compris entre 4 et 55 %, ladite masse étant **caractérisée par** une distribution en taille de pores trimodale et dans laquelle le volume représenté par les pores ayant un diamètre supérieur à 3,6 nm et inférieur ou égal à 20 nm représente entre 30 et 60% du volume poreux total, le volume représenté par les pores ayant un diamètre supérieur à 20 nm et inférieur ou égal à 100 nm représente entre 20 et 45% du volume poreux total, le volume représenté par les pores ayant un diamètre supérieur à 100 nm représente entre 10 et 40% du volume poreux total.

2. Masse de captation selon la revendication 1, dans laquelle le sulfure métallique est le sulfure de cuivre.

3. Masse de captation selon les revendications 1 ou 2, dans laquelle ladite matrice représente entre 17 et 94% en poids du poids total de la masse de captation.

4. Masse de captation selon les revendications 1 à 3, **caractérisée en ce que** ladite masse a un volume poreux total compris entre 0,35 cm³.g⁻¹ et 1,5 cm³.g⁻¹.

5. Masse de captation selon les revendications 1 à 4, **caractérisée en ce que** ladite masse a une surface spécifique comprise entre 50 m².g⁻¹ et 450 m².g⁻¹.

6. Procédé de préparation de la masse de captation selon les revendications 1 à 5 comprenant les étapes suivantes :
a1) une étape de mise en solution d'un précurseur acide d'aluminium choisi parmi le sulfate d'aluminium, le chlorure d'aluminium et le nitrate d'aluminium dans l'eau, à une température comprise entre 20 et 90°C, à un pH compris entre 0,5 et 5, pendant une durée comprise entre 2 et 60 minutes,
b1) une étape d'ajustement du pH par ajout dans la suspension obtenue à l'étape a1) d'au moins un précurseur basique choisi parmi l'aluminate de sodium, l'aluminate de potassium, l'ammoniaque, l'hydroxyde de sodium et l'hydroxyde de potassium, à une température comprise entre 20 et 90°C, et à un pH compris entre 7 et 10, pendant une durée comprise entre 5 et 30 minutes,
c1) une étape de co-précipitation de la suspension obtenue à l'issue de l'étape b1) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, le débit relatif des précurseurs acide et basique étant choisi de manière à obtenir un pH du milieu réactionnel compris entre 7 et 10 et le débit du ou des précurseurs acide et basique contenant de l'aluminium étant réglé de manière à obtenir une concentration en alumine finale dans la suspension comprise entre 10 et 38 g/L,
d1) une étape de filtration de la suspension obtenue à l'issue de l'étape c1) de co-précipitation pour obtenir un gel d'alumine,
e1) une étape de séchage dudit gel d'alumine obtenu à l'étape d1) pour obtenir une poudre,
f1) une étape de traitement thermique de la poudre obtenue à l'issue de l'étape e1) à une température comprise entre 500 et 1000°C, en présence ou non d'un flux d'air contenant jusqu'à 60 % en volume d'eau pour obtenir un oxyde poreux aluminique calciné,
g1) une étape de malaxage de l'oxyde poreux aluminique calciné obtenu à l'étape f1) avec une solution comprenant au moins un précurseur du ou des métaux choisi(s) dans le groupe constitué par le cuivre, le chrome, le manganèse, le fer, le cobalt et le nickel pour obtenir une pâte,
h1) une étape de mise en forme de la pâte obtenue,
i1) une étape de séchage de la pâte mise en forme à une température inférieure à 200°C, de manière à obtenir un précurseur séché de ladite masse de captation,
j1) éventuellement une étape de traitement thermique dudit précurseur séché à une température comprise entre 200 et 1500°C en présence ou non d'eau,
k1) une étape de sulfuration dudit précurseur obtenu à l'étape i1) ou j1) de manière à obtenir ladite masse de captation.

7. Procédé de préparation selon la revendication 6, dans lequel la concentration en alumine de la suspension de gel d'alumine obtenue à l'étape c1) est comprise entre 13 et 35 g/L.

8. Procédé de préparation de la masse de captation selon les revendications 1 à 5 comprenant les étapes suivantes :
a2) une première étape de précipitation, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent Al₂O₃ lors de ladite première étape de précipitation par rapport à la quantité totale d'alumine formée en équivalent Al₂O₃ à l'issue de l'étape c2) du procédé de préparation, ladite étape opérant à une température comprise entre 20 et 90°C et pendant une durée comprise entre 2 et 30 minutes,
b2) une étape de chauffage de la suspension obtenue à l'étape a2) à une température comprise entre 40 et 90°C pendant une durée comprise entre 7 et 45 minutes pour obtenir un gel d'alumine,
c2) une deuxième étape de précipitation de la suspension obtenue à l'issue de l'étape de chauffage b2) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95 %, le taux d'avancement étant défini comme étant la proportion d'alumine formée en équivalent Al₂O₃ lors de ladite deuxième étape de précipitation par rapport à la quantité totale d'alumine formée en équivalent Al₂O₃ à l'issue de l'étape c2) du procédé de préparation, ladite étape opérant à une température comprise entre 40 et 90°C et pendant une durée comprise entre 2 et 50 minutes,
d2) une étape de filtration de la suspension obtenue à l'issue de l'étape c2) de deuxième précipitation pour obtenir un gel d'alumine,
e2) une étape de séchage dudit gel d'alumine obtenu à l'étape d2) pour obtenir une poudre,
f2) une étape de traitement thermique de la poudre obtenue à l'issue de l'étape e2) à une température comprise entre 500 et 1000°C, en présence ou non d'un flux d'air contenant jusqu'à 60 % en volume d'eau pour obtenir un oxyde poreux aluminique calciné,
g2) une étape de malaxage de l'oxyde poreux aluminique calciné obtenu à l'étape f2) avec une solution comprenant au moins un précurseur du ou des métaux choisi(s) dans le groupe constitué par le cuivre, le chrome, le manganèse, le fer, le cobalt et le nickel pour obtenir une pâte,
h2) une étape de mise en forme de la pâte obtenue,
i2) une étape de séchage de la pâte mise en forme à une température inférieure à 200°C de manière à obtenir un précurseur séché de ladite masse de captation,
j2) éventuellement une étape de traitement thermique dudit précurseur séché à une température comprise entre 200 et 1500°C en présence ou non d'eau,
k2) une étape de sulfuration dudit précurseur obtenu à l'étape i2) ou j2) de manière à obtenir ladite masse de captation.

9. Procédé de préparation selon la revendication 8, dans lequel le taux d'avancement de la première étape de précipitation a2) est compris entre 6 et 12%.

10. Procédé de captation de métaux lourds dans un effluent gazeux ou liquide, dans lequel ledit effluent est mis en contact avec une masse de captation telle que définie dans l'une quelconque des revendications 1 à 5.

11. Procédé selon la revendication 10, **caractérisé en ce que** l'effluent gazeux ou liquide à traiter contient du mercure.

12. Procédé selon les revendications 10 ou 11, **caractérisé en ce que** le taux d'hygrométrie de l'effluent gazeux est compris entre 0% et 99%.

## Patentansprüche

1. Einfangmasse zum Einfangen der Schwermetalle in einem flüssigen oder gasförmigen Abstrom, umfassend eine kalzinierte, mehrheitlich aluminiumoxidhaltige Matrix mit einem Gehalt an Aluminiumoxid größer oder gleich 90 Gew.-% in Bezug auf die Matrix und eine aktive Phase, umfassend mindestens ein Metallsulfid, dessen Metall in der Gruppe ausgewählt ist, umfassend Kupfer, Chrom, Mangan, Eisen, Kobalt und Nickel, wobei die aktive Phase zur Gänze innerhalb der kalzinierten mehrheitlich aluminiumoxidhaltigen Matrix zugemischt wird, wobei der Gewichtsprozentsatz des oder der Metalle der aktiven Phase, ausgedrückt in Bezug auf das Gesamtgewicht der Einfangmasse, zwischen 4 und 55 % beträgt, wobei die Masse durch eine trimodale Porengrößenverteilung gekennzeichnet ist, und bei der das durch die Poren mit einem Durchmesser größer als 3,6 nm und kleiner oder gleich 20 nm dargestellte Volumen zwischen 30 und 60 % des Gesamtporenvolumens darstellt, wobei das durch die Poren mit einem Durchmesser größer als 20 nm und kleiner oder gleich 100 nm dargestellte Volumen zwischen 20 und 45 % des Gesamtporenvolumens darstellt, wobei das durch die Poren mit einem Durchmesser größer als 100 nm dargestellte Volumen zwischen 10 und 40 % des Gesamtporenvolumens darstellt.

2. Einfangmasse nach Anspruch 1, bei der das Metallsulfid Kupfersulfid ist.

3. Einfangmasse nach den Ansprüchen 1 oder 2, bei der die Matrix zwischen 17 und 94 Gew.-% des Gesamtgewichts der Einfangmasse darstellt.

4. Einfangmasse nach den Ansprüchen 1 bis 3, **dadurch gekennzeichnet, dass** die Masse ein Gesamtporenvolumen zwischen 0,35 cm³.g⁻¹ und 1,5 cm³.g⁻¹ hat.

5. Einfangmasse nach den Ansprüchen 1 bis 4, **dadurch gekennzeichnet, dass** die Masse eine spezifische Oberfläche zwischen 50 m².g⁻¹ und 450 m².g⁻¹ hat.

6. Verfahren zur Herstellung der Einfangmasse nach den Ansprüchen 1 bis 5, umfassend die folgenden Schritte:
a1) einen Schritt des Lösens einer sauren Aluminiumvorstufe, ausgewählt unter Aluminiumsulfat, Aluminiumchlorid und Aluminiumnitrat in Wasser bei einer Temperatur zwischen 20 und 90 °C, einem pH-Wert zwischen 0,5 und 5, während einer Dauer zwischen 2 und 60 Minuten,
b1) einen Schritt des Einstellens des pH-Werts durch Hinzufügen in die in Schritt a1) erhaltene Suspension mindestens einer basischen Vorstufe, ausgewählt unter Natriumaluminat, Kaliumaluminat, Ammoniak, Natriumhydroxid und Kaliumhydroxid, bei einer Temperatur zwischen 20 und 90 °C und einem pH-Wert zwischen 7 und 10, während einer Dauer zwischen 5 und 30 Minuten,
c1) einen Schritt der Co-Ausfällung der in Schritt b1) erhaltenen Suspension durch Hinzufügen in die Suspension mindestens einer basischen Vorstufe, ausgewählt unter Natriumaluminat, Kaliumaluminat, Ammoniak, Natriumhydroxid und Kaliumhydroxid, und mindestens einer sauren Vorstufe, ausgewählt unter Aluminiumsulfat, Aluminiumchlorid, Aluminiumnitrat, Schwefelsäure, Salzsäure und Salpetersäure, wobei mindestens eine der basischen oder sauren Vorstufen Aluminium umfasst, wobei die relative Menge der sauren und basischen Vorstufen derart gewählt ist, dass ein pH-Wert des Reaktionsmediums zwischen 7 und 10 erhalten wird, und wobei die Menge der sauren und basischen Vorstufe(n), umfassend Aluminium, derart geregelt ist, dass eine endgültige Aluminiumoxidkonzentration in der Suspension zwischen 10 und 38 g/L erhalten wird,
d1) einen Schritt der Filterung der in Schritt c1) der Co-Ausfällung erhaltenen Suspension, um ein Aluminiumoxidgel zu erhalten,
e1) einen Schritt der Trocknung des in Schritt d1) erhaltenen Aluminiumoxidgels, um ein Pulver zu erhalten,
f1) einen Schritt der Wärmebehandlung des in Schritt e1) erhaltenen Pulvers bei einer Temperatur zwischen 500 und 1000 °C in Gegenwart oder nicht eines Luftstroms, der bis zu 60 Vol.-% Wasser enthält, um ein kalziniertes poröses Aluminiumoxid zu erhalten,
g1) einen Schritt des Mischens des in Schritt f1) erhaltenen kalzinierten porösen Aluminiumoxids mit einer Lösung, umfassend mindestens eine Vorstufe des oder der Metalle, ausgewählt in der Gruppe, die von Kupfer, Chrom, Mangan, Eisen, Kobalt und Nickel gebildet ist, um eine Paste zu erhalten,
h1) einen Schritt des Formens der erhaltenen Paste,
i1) einen Schritt des Trocknens der geformten Paste bei einer Temperatur unter 200 °C, um eine getrocknete Vorstufe der Einfangmasse zu erhalten,
j1) eventuell einen Schritt der Wärmebehandlung der getrockneten Vorstufe bei einer Temperatur zwischen 200 und 1500 °C im Beisein oder nicht von Wasser,
k1) einen Schritt der Sulfidierung der in Schritt i1) oder j1) erhaltenen Vorstufe, um die Einfangmasse zu erhalten.

7. Herstellungsverfahren nach Anspruch 6, bei dem die Aluminiumoxidkonzentration in der in Schritt c1) erhaltenen Suspension eines Aluminiumoxids zwischen 13 und 35 g/L beträgt.

8. Verfahren zur Herstellung der Einfangmasse nach den Ansprüchen 1 bis 5, umfassend die folgenden Schritte:
a2) einen ersten Schritt der Ausfällung in einem wässrigen Reaktionsmedium mindestens einer basischen Vorstufe, ausgewählt unter Natriumaluminat, Kaliumaluminat, Ammoniak, Natriumhydroxid und Kaliumhydroxid, und mindestens einer sauren Vorstufe, ausgewählt unter Aluminiumsulfat, Aluminiumchlorid, Aluminiumnitrat, Schwefelsäure, Salzsäure und Salpetersäure, bei dem mindestens eine der basischen oder sauren Vorstufen Aluminium umfasst, wobei die relative Menge der sauren und basischen Vorstufen gewählt ist, um einen pH-Wert des Reaktionsmediums zwischen 8,5 und 10,5 zu erhalten, und wobei die Menge der sauren und basischen Vorstufe(n), umfassend Aluminium, geregelt ist, um eine Fortschrittsrate des ersten Schritts zwischen 5 und 13 % zu erhalten, wobei die Fortschrittsrate definiert ist als das Verhältnis von Aluminiumoxid, das als Al₂O₃ Äquivalent in dem ersten Ausfällungsschritt gebildet wird, zu der Gesamtaluminiumoxidmenge, die als Al₂O₃ Äquivalent nach Schritt c2) des Herstellungsverfahren gebildet wird, wobei der Schritt bei einer Temperatur zwischen 20 und 90 °C während einer Dauer zwischen 2 und 30 Minuten durchgeführt wird,
b2) einen Schritt des Erhitzens der in Schritt a2) erhaltenen Suspension auf eine Temperatur zwischen 40 und 90 °C während einer Dauer zwischen 7 und 45 Minuten, um ein Aluminiumoxidgel zu erhalten,
c2) einen zweiten Schritt der Ausfällung der in dem Erhitzungsschritt b2) erhaltenen Suspension durch Hinzufügen in die Suspension mindestens einer basischen Vorstufe, ausgewählt unter Natriumaluminat, Kaliumaluminat, Ammoniak, Natriumhydroxid und Kaliumhydroxid, und mindestens einer sauren Vorstufe, ausgewählt unter Aluminiumsulfat, Aluminiumchlorid, Aluminiumnitrat, Schwefelsäure, Salzsäure und Salpetersäure, bei dem mindestens eine der basischen oder sauren Vorstufen Aluminium umfasst, wobei die relative Menge der sauren und basischen Vorstufen gewählt ist, um einen pH-Wert des Reaktionsmediums zwischen 8,5 und 10,5 zu erhalten, und wobei die Menge der sauren und basischen Vorstufe(n), umfassend Aluminium, geregelt ist, um eine Fortschrittsrate des zweiten Schritts zwischen 87 und 95 % zu erhalten, wobei die Fortschrittsrate definiert ist als das Verhältnis von Aluminiumoxid, das als Al₂O₃ Äquivalent in dem zweiten Ausfällungsschritt gebildet wird, zu der Gesamtaluminiumoxidmenge, die als Al₂O₃ Äquivalent nach Schritt c2) des Herstellungsverfahren gebildet wird, wobei der Schritt bei einer Temperatur zwischen 40 und 90 °C während einer Dauer zwischen 2 und 50 Minuten durchgeführt wird,
d2) einen Schritt der Filterung der in Schritt c2) der zweiten Ausfällung erhaltenen Suspension, um ein Aluminiumoxidgel zu erhalten,
e2) einen Schritt der Trocknung des in Schritt d2) erhaltenen Aluminiumoxidgels, um ein Pulver zu erhalten,
f2) einen Schritt der Wärmebehandlung des in Schritt e2) erhaltenen Pulvers bei einer Temperatur zwischen 500 und 1000 °C im Beisein oder nicht eines Luftstroms, der bis zu 60 Vol.-% Wasser enthält, um ein kalziniertes poröses Aluminiumoxid zu erhalten,
g2) einen Schritt des Mischens des in Schritt f2) erhaltenen kalzinierten porösen Aluminiumoxids mit einer Lösung, umfassend mindestens eine Vorstufe des oder der Metalle, ausgewählt in der Gruppe, die von Kupfer, Chrom, Mangan, Eisen, Kobalt und Nickel gebildet ist, um eine Paste zu erhalten,
h2) einen Schritt des Formens der erhaltenen Paste,
i2) einen Schritt des Trocknens der geformten Paste bei einer Temperatur unter 200 °C, um eine getrocknete Vorstufe der Einfangmasse zu erhalten,
j2) eventuell einen Schritt der Wärmebehandlung der getrockneten Vorstufe bei einer Temperatur zwischen 200 und 1500 °C im Beisein oder nicht von Wasser,
k2) einen Schritt der Sulfidierung der in Schritt i2) oder j2) erhaltenen Vorstufe, um die Einfangmasse zu erhalten.

9. Herstellungsverfahren nach Anspruch 8, bei dem die Fortschrittsrate des ersten Ausfällungsschritts a2) zwischen 6 und 12 % beträgt.

10. Verfahren zum Einfangen von Schwermetallen in einem gasförmigen oder flüssigen Abstrom, bei dem der Abfluss mit einer Einfangmasse, wie in einem der Ansprüche 1 bis 5 definiert, in Kontakt gebracht wird.

11. Verfahren nach Anspruch 10, **dadurch gekennzeichnet, dass** der zu behandelnde gasförmige oder flüssige Abstrom Quecksilber enthält.

12. Verfahren nach den Ansprüchen 10 oder 11, **dadurch gekennzeichnet, dass** der Feuchtigkeitsgehalt des gasförmigen Abstromes zwischen 0 % und 99 % beträgt.

## Claims

1. Trapping mass for trapping heavy metals in a liquid or gaseous effluent comprising a calcined predominantly aluminous oxide matrix having an alumina content of greater than or equal to 90% by weight relative to said matrix and an active phase comprising at least one metal sulfide, the metal of which is selected from the group consisting of copper, chromium, manganese, iron, cobalt and nickel, said active phase being entirely co-mixed within said calcined predominantly aluminous oxide matrix, the weight percentage of the metal(s) of the active phase, expressed relative to the total weight of the trapping mass being between 4 and 55%, said mass being **characterized by** a trimodal pore size distribution and in which the value represented by the pores having a diameter of greater than 3.6 nm and less than or equal to 20 nm represents between 30% and 60% of the total pore volume, the volume represented by the pores having a diameter of greater than 20 nm and less than or equal to 100 nm represents between 20% and 45% of the total pore volume, the volume represented by the pores having a diameter of greater than 100 nm represents between 10% and 40% of the total pore volume.

2. Trapping mass according to Claim 1, in which the metal sulfide is copper sulfide.

3. Trapping mass according to Claims 1 or 2, in which said matrix represents between 17% and 94% by weight of the total weight of the trapping mass.

4. Trapping mass according to Claims 1 to 3, **characterized in that** said mass has a total pore volume of between 0.35 cm³.g⁻¹ and 1.5 cm³.g⁻¹,

5. Trapping mass according to Claims 1 to 4, **characterized in that** said mass has a specific surface area of between 50 m².g⁻¹ and 450 m².g⁻¹,

6. Process for preparing the trapping mass according to Claims 1 to 5, comprising the following steps:
a1) a step of dissolving an acid precursor of aluminium selected from aluminium sulfate, aluminium chloride and aluminium nitrate in water, at a temperature between 20°C and 90°C, at a pH between 0.5 and 5, for a time of between 2 and 60 minutes,
b1) a step of adjusting the pH by adding to the suspension obtained in step a1) at least one basic precursor selected from sodium aluminate, potassium aluminate, aqueous ammonia, sodium hydroxide and potassium hydroxide, at a temperature between 20°C and 90°C, at a pH between 7 and 10, for a time of between 5 and 30 minutes,
c1) a step of co-precipitating the suspension obtained at the end of step b1) by adding to the suspension at least one basic precursor selected from sodium aluminate, potassium aluminate, aqueous ammonia, sodium hydroxide and potassium hydroxide and at least one acid precursor selected from aluminium sulfate, aluminium chloride, aluminium nitrate, sulfuric acid, hydrochloric acid and nitric acid, at least one of the basic or acid precursors comprising aluminium, the relative flow rate of the acid and basic precursors being selected so as to obtain a pH of the reaction medium of between 7 and 10 and the flow rate of the acid and basic precursor(s) containing aluminium being adjusted so as to obtain a final alumina concentration in the suspension of between 10 and 38 g/l,
d1) a step of filtering the suspension obtained at the end of the co-precipitation step c1) in order to obtain an alumina gel,
e1) a step of drying said alumina gel obtained in step d1) in order to obtain a powder,
f1) a step of heat treatment of the powder obtained at the end of step e1) at a temperature of between 500°C and 1000°C, optionally in the presence of a stream of air containing up to 60% by volume of water in order to obtain a calcined aluminous porous oxide,
g1) a step of mixing the calcined aluminous porous oxide obtained in step f1) with a solution comprising at least one precursor of the metal(s) selected from the group consisting of copper, chromium, manganese, iron, cobalt and nickel in order to obtain a paste,
h1) a step of shaping the paste obtained,
i1) a step of drying the shaped paste at a temperature below 200°C, so as to obtain a dried precursor of said trapping mass,
j1) optionally a step of heat treatment of said dried precursor at a temperature between 200°C and 1500°C optionally in the presence of water,
k1) a step of sulfiding said precursor obtained in step i1) or j1) so as to obtain said trapping mass.

7. Preparation process according to Claim 6, in which the alumina concentration of the suspension of alumina gel obtained in step c1) is between 13 and 35 g/l.

8. Process for preparing the trapping mass according to Claims 1 to 5, comprising the following steps:
a2) a first step of precipitation, in an aqueous reaction medium, of at least one basic precursor selected from sodium aluminate, potassium aluminate, aqueous ammonia, sodium hydroxide and potassium hydroxide and at least one acid precursor selected from aluminium sulfate, aluminium chloride, aluminium nitrate, sulfuric acid, hydrochloric acid and nitric acid, in which at least one of the basic or acid precursors comprises aluminium, the relative flow rate of the acid and basic precursors is selected so as to obtain a pH of the reaction medium of between 8.5 and 10.5 and the flow rate of the acid and basic precursor(s) containing aluminium is adjusted so as to obtain a degree of advancement of the first step of between 5% and 13%, the degree of advancement being defined as being the proportion of alumina formed as Al₂O₃ equivalent during said first precipitation step, relative to the total amount of alumina formed as Al₂O₃ equivalent at the end of step c2) of the preparation process, said step taking place at a temperature between 20°C and 90°C and for a time of between 2 and 30 minutes,
b2) a step of heating the suspension obtained in step a2) at a temperature of between 40°C and 90°C for a time of between 7 and 45 minutes in order to obtain an alumina gel,
c1) a second step of precipitation of the suspension obtained at the end of the heating step b2) by adding to the suspension at least one basic precursor selected from sodium aluminate, potassium aluminate, aqueous ammonia, sodium hydroxide and potassium hydroxide and at least one acid precursor selected from aluminium sulfate, aluminium chloride, aluminium nitrate, sulfuric acid, hydrochloric acid and nitric acid, in which at least one of the basic or acid precursors comprises aluminium, the relative flow rate of the acid and basic precursors is selected so as to obtain a pH of the reaction medium of between 8.5 and 10.5 and the flow rate of the acid and basic precursor(s) containing aluminium is adjusted so as to obtain a degree of advancement of the second step of between 87% and 95%, the degree of advancement being defined as being the proportion of alumina formed as Al₂O₃ equivalent during said second precipitation step, relative to the total amount of alumina formed as Al₂O₃ equivalent at the end of step c2) of the preparation process, said step taking place at a temperature between 40°C and 90°C and for a time of between 2 and 50 minutes,
d2) a step of filtering the suspension obtained at the end of the second precipitation step c2) in order to obtain an alumina gel,
e2) a step of drying said alumina gel obtained in step d2) in order to obtain a powder,
f2) a step of heat treatment of the powder obtained at the end of step e2) at a temperature of between 500°C and 1000°C, optionally in the presence of a stream of air containing up to 60% by volume of water in order to obtain a calcined aluminous porous oxide,
g2) a step of mixing the calcined aluminous porous oxide obtained in step f2) with a solution comprising at least one precursor of the metal(s) selected from the group consisting of copper, chromium, manganese, iron, cobalt and nickel in order to obtain a paste,
h2) a step of shaping the paste obtained,
i2) a step of drying the shaped paste at a temperature below 200°C, so as to obtain a dried precursor of said trapping mass,
j2) optionally a step of heat treatment of said dried precursor at a temperature between 200°C and 1500°C optionally in the presence of water,
k2) a step of sulfiding said precursor obtained in step i2) or j2) so as to obtain said trapping mass.

9. Preparation process according to Claim 8, in which the degree of advancement of the first precipitation step a2) is between 6% and 12%.

10. Process for trapping heavy metals in a gaseous or liquid effluent, in which said effluent is bought into contact with a trapping mass as defined in any one of Claims 1 to 5.

11. Process according to Claim 10, **characterized in that** the gaseous or liquid effluent to be treated contains mercury.

12. Process according to Claim 10 or 11, **characterized in that** the moisture content of the gaseous effluent is between 0% and 99%.
